(19) Europäisches Patentamt
European Patent Office
Office européen des brevets

(11) Veröffentlichungsnummer: **0 548 792 A2**

# (12) EUROPÄISCHE PATENTANMELDUNG

(21) Anmeldenummer: **92121457.3**

(51) Int. Cl.$^5$: **C09B 62/503**

(22) Anmeldetag: **17.12.92**

(30) Priorität: **20.12.91 DE 4142377**
**16.01.92 DE 4200932**

(43) Veröffentlichungstag der Anmeldung:
**30.06.93 Patentblatt 93/26**

(84) Benannte Vertragsstaaten:
**BE CH DE ES FR GB IT LI NL PT**

(71) Anmelder: **HOECHST AKTIENGESELLSCHAFT**
**Postfach 80 03 20**
**W-6230 Frankfurt am Main 80(DE)**

(72) Erfinder: **Dannheim, Jörg, Dr.**
**Strubbergstrasse 32**
**W-6000 Frankfurt/M(DE)**
Erfinder: **v.d. Eltz, Andreas, Dr.**
**Escherheimer Landstrasse 514**
**W-6000 Frankfurt/M(DE)**

## (54) Wasserlöschliche faserreakfive Farbstoffe, Verfahren zu ihrer Herstellung und ihre Verwendung.

(57) Es werden wasserlösliche Farbstoffe beschrieben, wie beispielsweise Azofarbstoffe, Schwermetallkomplex-Azofarbstoffe, Anthrachinon-, Phthalocyanin- und Formazanfarbstoffe, die die Gruppe der allgemeinen Formel

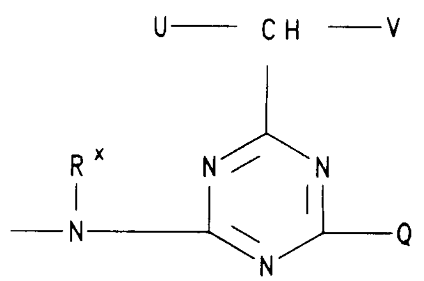

(3)

enthalten, in welcher bedeuten:
$R^x$ ist Wasserstoff oder gegebenenfalls substituiertes niederes Alkyl, U ist Wasserstoff, Cyano, niederes Alkanoyl, niederes Alkoxycarbonyl, Nitro, niederes Alkylsulfonyl oder gegebenenfalls substituiertes Arylsulfonyl, V ist Cyano, niederes Alkoxycarbonyl, gegebenenfalls substituiertes Aryloxycarbonyl, Carboxy, niederes Alkylaminocarbonyl, gegebenenfalls substituiertes Arylaminocarbonyl, niederes Alkylcarbonyl, gegebenenfalls substituiertes Arylcarbonyl oder Arylsulfonyl, Aminocarbonyl, Dialkylaminocarbonyl, Trifluormethyl, Nitro oder niederes Alkylsulfonyl und Q ist eine Aminogruppe, die durch den Rest $-W-(SO_2-Y)_z$ ein- oder zweimal substituiert ist, worin W ein Arylen- oder Alkylenrest ist oder eine Kombination solcher Reste, wobei die Alkylenreste solche von 1 bis 8 C-Atomen sind und substituiert sein können und die Arylenreste gegebenenfalls substituierte Phenylen- oder Naphthylenreste sind und die Alkylenreste durch ein oder mehrere Heterogruppen unterbrochen sein können und die Alkylen- und Arylenanteile in den kombinierten Alkylen/Arylen-Resten durch eine Heterogruppe voneinander getrennt sein können, der Rest $-SO_2-Y$ eine faserreaktive Gruppe der Vinylsulfonreihe ist und z die Zahl 1 oder 2 bedeutet, oder Q ist ein N-haltiger Rest, der über das N-Atom an den Triazinrest gebunden ist und, über einen niederen Alkylenrest gebunden, eine faserreaktive Gruppe der Vinylsulfonreihe enthält.
Die Farbstoffe eignen sich zum Färben von hydroxy- und/oder carbonamidgruppenhaltigem Material, insbesondere Fasermaterial.

EP 0 548 792 A2

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen faserreaktvien Farbstoffen, die verbesserte Eigenschaften, insbesondere in anwendungstechnischer Sicht, aufweisen. So sind aus der US-Patentschrift Nr. 4 740 592 und aus den japanischen Patent-Auslegungen Sho-40-17113 und Sho-50-31566 faserreaktive Farbstoffe bekannt, die einen s-Triazinrest enthalten, an den eine faserreaktive Gruppe aus der Vinylsulfon-Reihe gebunden ist und dessen dritter Substituent eine gegebenenfalls substituierte Aminogruppe oder eine Methoxygruppe ist. Desweiteren sind aus der US-Patentschrift Nr. 3 205 218 Farbstoffe mit einem Triazinrest bekannt, der als Substituenten Malonsäurediester-, Malonitrilmonoester- und Acetylaceton-Reste enthält. Die bekannten Farbstoffe haben jedoch gewisse anwendungstechnische Mängel; so besitzen sie einen Fixiergrad, der aus heutiger Sicht nicht mehr voll befriedigend ist, und sie liefern Färbungen mit nicht ausreichender coloristischer Farbstärke.

Mit der vorliegenden Erfindung wurden nunmehr neue, wasserlösliche, verbesserte Farbstoffe gefunden, die der nachstehenden allgemeinen Formel (1) entsprechen.

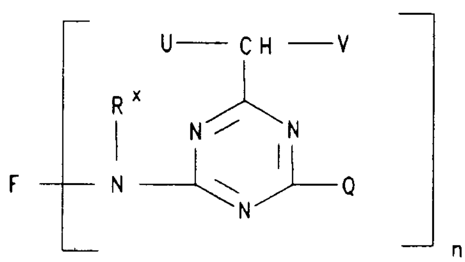

(1)

In Formel (1) bedeuten:

- F ist der Rest eines Monoazo-, Disazo- oder Polyazofarbstoffes oder eines davon abgeleiteten Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perlyentetracarbimid-Farbstoffes;
- $R^x$ ist ein Wasserstoffatom oder eine Alkylgruppe von 1 bis 4 C-Atomen, wie die Methyl- oder Ethylgruppe, die durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, bevorzugt die Methyl- oder Ethylgruppe und insbesondere ein Wasserstoffatom;
- n ist die Zahl 1 oder 2, bevorzugt 1;
- U ist ein Wasserstoffatom, die Cyanogruppe, eine Alkanoylgruppe von 2 bis 5 C-Atomen, wie die Propionylgruppe und insbesondere die Acetylgruppe, oder eine Alkoxycarbonylgruppe von 2 bis 5 C-Atomen, wie die Ethoxycarbonyl- oder Methoxycarbonylgruppe, oder ist die Nitrogruppe, eine Alkylsulfonylgruppe mit einem Alkylrest von 1 bis 4 C-Atomen oder eine Arylsulfonylgruppe, wobei die Arylgruppe substituiert sein kann, wie beispielsweise durch 1 oder 2 Substituenten aus der Gruppe Carboxy, Sulfo, Methyl, Ethyl, Methoxy und Ethoxy, beispielsweise die Phenylsulfonylgruppe, die im Phenylrest durch die angegebenen Substituenten substituiert sein kann, und ist bevorzugt ein Wasserstoffatom oder die Acetyl-, Ethoxycarbonyl- oder Methoxycarbonylgruppe und insbesondere bevorzugt ein Wasserstoffatom;
- V ist die Cyanogruppe oder eine Alkoxycarbonylgruppe von 2 bis 5 C-Atomen, wie die Methoxycarbonyl- oder Ethoxycarbonylgruppe, eine Aryloxycarbonylgruppe, deren Arylrest substituiert sein kann, wie beispielsweise durch 1 oder 2 Substituenten aus der Gruppe Sulfo, Carboxy, Methyl, Ethyl, Methoxy und Ethoxy, beispielsweise die Phenoxycarbonylgruppe, die durch 1 oder 2 der genannten Substituenten substituiert sein kann, oder ist die Carboxygruppe, eine Alkylamino-carbonyl-Gruppe mit einem Alkylrest von 1 bis 4 C-Atomen, eine Arylamino-carbonyl-Gruppe, wobei der Arylrest substituiert sein kann, wie durch die zuvor angegebenen Substituenten, wie beispielsweise der Phenylamino-carbonyl-Rest, der durch die oben erwähnten Substituenten substituiert sein kann, oder ist eine Alkylcarbonylgruppe von 2 bis 5 C-Atomen, wie die Acetylgruppe, oder ist eine Arylcarbonylgruppe, wie die Phenylcarbonylgruppe, oder ist eine Arylsulfonylgruppe, wie die Pnenylsulfonylgruppe, wobei auch hier in diesen Gruppen die Arylreste durch 1 oder 2 der zuvor angegebenen Substituenten substituiert sein können, oder ist die

Aminocarbonylgruppe oder eine N,N-Dialkyl-amino-carbonyl-Gruppe mit Alkylresten von jeweils 1 bis 4 C-Atomen oder ist die Trifluormethyl-, die Nitro- oder eine Alkylsulfonylgruppe mit 1 bis 4 C-Atomen im Alkylrest und ist bevorzugt die Cyanogruppe, die Acetylgruppe, die Methoxycarbonylgruppe und die Ethoxycarbonylgruppe und insbesondere bevorzugt die Ethoxycarbonyl- und die Methoxycarbonylgruppe;

Q ist eine Gruppe der allgemeinen Formel (2a) oder (2b)

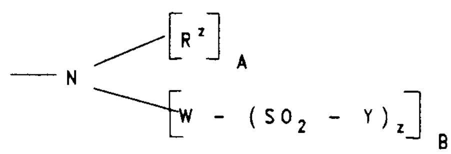

(2a)

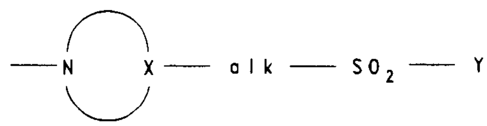

(2b)

in welchen

$R^z$ ein Wasserstoffatom oder eine Alkylgruppe von 1 bis 6 C-Atomen, bevorzugt von 1 bis 4 C-Atomen, wie insbesondere die Methyl- oder Ethylgruppe, ist, die durch 1 oder 2 Substituenten aus der Gruppe Halogen, wie Chlor oder Brom, Hydroxy, Cyano, Alkoxy von 1 bis 4 C-Atomen, wie Methoxy und Ethoxy, Carboxy, Carbalkoxy von 2 bis 5 C-Atomen, Phenoxycarbonyl, Alkanoyl von 2 bis 5 C-Atomen, Benzoyl, Sulfobenzoyl, Sulfamoyl, Sulfo und Sulfato und/oder durch einen gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierten Phenylrest substituiert sein kann, oder ein Cycloalkylrest von 5 bis 8 C-Atomen ist, wie ein Cyclopentyl-, Cyclohexyl- oder Dimethylcyclohexyl-Rest, oder ein gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierter Phenylrest ist,

W ein Arylen-, Alkylen-, Alkylen-arylen-, Arylen-alkylen-, Alkylen-arylen-alkylen- oder Arylen-alkylen-arylen-Rest ist, wobei die Alkylenreste solche von 1 bis 8 C-Atomen, vorzugsweise von 2 bis 6, insbesondere von 2 bis 4 C-Atomen, sind und substituiert sein können und die Arylenreste gegebenenfalls substituierte Phenylen- oder Naphthylenreste sind und die Alkylenreste durch 1 oder mehrere, wie 2 oder 3, Heterogruppen, wie -NH-, -N(R)- mit R gleich Alkyl von 1 bis 4 C-Atomen, das durch Sulfo, Carboxy, Sulfato, Phenyl oder Sulfophenyl substituiert sein kann, -O- , -S- , $-SO_2-$ , -CO- , $-SO_2-NH-$ , $-NH-SO_2-$ , -NH-CO- und -CO-NH- , unterbrochen sein können und die Alkylen- und Arylenanteile in den kombinierten Alkylen/Arylen-Resten durch eine Heterogruppe, wie beispielsweise einer der oben beschriebenen, voneinander getrennt sein können,

Y die Vinylgruppe bedeutet oder eine Ethylgruppe ist, die in β-Stellung einen alkalisch eliminierbaren Substituenten enthält, wie die β-Sulfatoethyl-, β-Thiosulfatoethyl- oder β-Phosphatoethyl-Gruppe oder eine
β-Alkanoyloxy-ethyl-Gruppe mit 2 bis 5 C-Atomen im Alkanoylrest, wie die β-Acetyloxyethyl-Gruppe, oder die β-Benzoyloxy-ethyl-, β-(Sulfobenzoyloxy)-ethyl oder die β-(p-Toluolsulfonyloxy)-ethyl-Gruppe oder eine β-Halogenethyl-Gruppe, wie die β-Bromethyl- oder β-Chlorethyl-Gruppe, und bevorzugt die Vinylgruppe und insbesondere die β-Sulfatoethyl-Gruppe ist,

z die Zahl 1 oder 2 ist,

A die Zahl Null oder 1 bedeutet und

B die Zahl 1 oder 2 ist,

wobei die Summe von (A + B) gleich der Zahl 2 ist und wobei im Falle von B gleich 2 die Gruppen $-W-(SO_2-Y)_z$ zueinander die gleiche Bedeutung oder eine voneinander verschiedene Bedeutung haben können,

X zusammen mit dem N-Atom den bivalenten Rest eines aus 1 oder 2 Alkylgruppen von 1 bis 5 C-Atomen und gegebenenfalls 1 oder 2 Heterogruppen, wie Stickstoff- und Sauerstoffatomen und eine Gruppe -NH- , bestehenden heterocyclischen Ringes bildet, wie beispielsweise den Piperazin-1,4-ylen- oder einen Piperidinyl-Rest, und

alk einen Alkylenrest von 1 bis 4 C-Atomen, bevorzugt von 2 oder 3 C-Atomen, wie den Ethylen- oder n-Propylen-Rest, bedeutet.

Bevorzugt ist F der Rest eines Mono- oder Disazofarbstoffes oder der Rest eines Metallkomplex-Azofarbstoffes, wie eines o,o'-1:1-Kupferkomplex-Monoazo- oder -Disazofarbstoffes, oder eines Triphendioxazin-, eines Anthrachinon- oder eines Phthalocyaninfarbstoffes, wie eines Kupferphthalocyaninfarbstoffes.

Der Rest F kann in seinem Grundgerüst die bei organischen Farbstoffen üblichen Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono-oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-($C_1$-$C_4$-Alkyl)-N-phenylamino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-($\beta$-hydroxyethyl)-amino, N,N-Di-($\beta$-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methylsulfamoyl, N-Ethyl-sulfamoyl, N-Propyl-sulfamoyl, N-Isopropyl-sulfamoyl, N-Butyl-sulfamoyl, N-($\beta$-Hydroxyethyl)-sulfamoyl und N,N-Di-($\beta$-hydroxyethyl)-sulfamoyl; N-Phenylsulfamoyl-, Ureido-, Hydroxy-, Carboxy-, Sulfomethyl- und Sulfogruppen; Reste der Formel $-SO_2-Y$ mit Y der obigen Bedeutung, wie $\beta$-Sulfatoethylsulfonyl-, $\beta$-Thiosulfatoethylsulfonyl-,$\beta$-Phosphatoethylsulfonyl-, $\beta$-Acetyloxiethylsulfonyl-, $\beta$-Chlorethylsulfonyl- und Vinylsulfonylgruppen.

Vorzugsweise ist der Farbstoffrest F durch eine oder mehrere, wie 2 bis 6, Sulfogruppen substituiert, und gegebenenfalls weitere Substituenten sind bevorzugt solche aus der Gruppe Methyl, Ethyl, Methoxy, Ethoxy, Alkanoylamino von 2 bis 5 C-Atomen, wie Acetylamino, Benzoylamino, Amino, Chlor, Brom, Ureido, Hydroxy, Carboxy und Sulfomethyl.

Sowohl in allen obigen als auch in den nachstehenden Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM, Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ , in welchen

M ein Wasserstoffatom oder eine salzbildendes Metallatom, wie ein Alkalimetall, wie Natrium, Kalium oder Lithium, ist.

Formelreste $R^x$ sind beispielsweise: Wasserstoff, Methyl, Ethyl, Propyl, Isopropyl, Butyl, Isobutyl, sek.-Butyl, tert.-Butyl, Carboxymethyl, $\beta$-Carboxyethyl, $\beta$-Carboxypropyl, Methoxycarbonylmethyl, Ethoxycarbonylmethyl, $\beta$-Methoxyethyl, $\beta$-Ethoxyethyl, $\beta$-Methoxypropyl, $\beta$-Chlorethyl, $\gamma$-Brompropyl, $\beta$-Hydroxyethyl, $\beta$-Hydroxybutyl, $\beta$-Cyanoethyl, Sulfomethyl, $\beta$-Sulfoethyl, Amidosulfonylmethyl und $\beta$-Sulfatoethyl.

Formelreste $R^z$ sind beispielsweise: Wasserstoff, Methyl, Ethyl, Carboxymethyl, Carbomethoxymethyl, Carbethoxymethyl, Sulfomethyl, Sulfamidomethyl, $\beta$-Carboxyethyl, $\beta$-Sulfatoethyl, n-Propyl, $\beta$-Carboxypropyl, $\beta$-Sulfatoethyl, $\beta$-Ethoxyethyl, $\beta$-Methoxypropyl, $\gamma$-Chlorpropyl, $\gamma$-Brompropyl, n-Butyl, Isobutyl, Cyclohexyl, Phenyl, 2-Chlorphenyl, 3-Chlorphenyl, 4-Chlorphenyl, 2- oder 3-oder 4-Sulfophenyl, 2-Methyl-phenyl, 4-Methoxy-phenyl, 3-Methyl-phenyl und 4-Ethyl-phenyl. Hiervon bevorzugt sind die gegebenenfalls substituierten Alkylgruppen und insbesondere bevorzugt die Methyl- und die Ethylgruppe und das Wasserstoffatom.

In dem Rest W sind Arylenreste bevorzugt Phenylen- und Naphthylenreste, die einen oder mehrere, wie 2 oder 3, bevorzugt 1 oder 2, Substituenten enthalten können, die beispielsweise der Gruppe der Substituenten Sulfo, Carboxy, Alkyl von 1 bis 4 C-Atomen, wie Methyl und Ethyl, Halogen, wie Fluor, Chlor und Brom, Hydroxy, Cyano, Alkoxy von 1 bis 4 C-Atomen, wie Methoxy und Ethoxy, Sulfamoyl, Trifluormethyl und Alkoxycarbonyl von 2 bis 5 C-Atomen, wie Methoxycarbonyl und Ethoxycarbonyl, angehören. Bevorzugt ist hiervon W ein Phenylenrest, der durch die oben angegebenen Substituenten substituiert sein kann, wobei die Substituenten aus der Gruppe Alkyl von 1 bis 4 C-Atomen, Chlor, Alkoxy von 1 bis 4 C-Atomen, Carboxy und Sulfo bevorzugt sind.

Alkylenreste im Rest W sind bevorzugt geradkettige und verzweigte Alkylengruppen von 2 bis 6 C-Atomen, die durch die angegebenen Heterogruppen, wie 1 oder 2 dieser Heterogruppen, unterbrochen und durch eine oder mehrere wasserlöslichmachende Gruppen, wie Sulfo-, Carboxy, Sulfato- und/oder Phosphatogruppen, und/oder durch andere Substituenten, wie Hydroxy, Acetyloxy- und Cyanogruppen, substituiert sein können. Bevorzugt hiervon sind geradkettige Alkylengruppen von 2 bis 4 C-Atomen oder eine durch ein Sauerstoffatom oder eine Amino- oder Methylamino-Gruppe unterbrochene Alkylengruppe von 4 C-Atomen.

Ist der Formelrest W ein Alkylen-arylen-alkyl-Rest, so ist in diesen Gruppen der Alkylenrest bevorzugt ein geradkettiger Rest von 1 bis 3 C-Atomen und der Arylenrest bevorzugt ein 1,3- oder insbesondere 1,4-Phenylenrest, die durch eine oder mehrere wasserlöslichmachende Gruppen substituiert sein können. Alkylen-arylen-Reste sind insbesondere die Reste der Formeln $-CH_2CH_2$-phenylen- und $-CH_2$-phenylen- .

Gruppen der allgemeinen Formeln (2a) und (2b)
sind beispielsweise: 2-(β-Sulfatoethylsulfonyl)-phenyl-amino, 3-(β-Sulfatoethylsulfonyl)-phenyl-amino, 4-(β-Sulfatoethylsulfonyl)-phenyl-amino, 2-Carboxy-5-(β-sulfatoethylsulfonyl)-phenyl-amino, 2-Chlor-3-(β-Sulfatoethylsulfonyl)-phenyl-amino, 2-Chlor-4-(β-sulfatoethylsulfonyl)-phenyl-amino, 2-Ethoxy-4- oder -5-(β-sulfatoethylsulfonyl)-phenyl-amino, 2-Ethyl-4-(β-sulfatoethylsulfonyl)-phenyl-amino, 2-Methoxy-5-(β-sulfatoethylsulfonyl)-phenyl-amino, 2,4-Diethoxy-5-(β-sulfatoethylsulfonyl)-phenyl-amino, 2,4-Dimethoxy-5-(β-sulfatoethylsulfonyl)-phenyl-amino, 2,5-Dimethoxy-4-(β-sulfatoethylsulfonyl)-phenyl-amino, 2-Methoxy-5-methyl-4-(β-sulfatoethylsulfonyl)-phenyl-amino, 2- oder 3- oder 4-(β-Thiosulfatoethylsulfonyl)-phenyl-amino, 2-Methoxy-5-(β-thiosulfatoethylsulfonyl)-phenyl-amino, 2-Sulfo-4-(β-phosphatoethylsulfonyl)-phenyl-amino, 2-Sulfo-4-vinylsulfonyl-phenyl-amino, 2-Hydroxy-4- oder -5-(β-sulfatoethylsulfonyl)-phenyl-amino, 2-Chlor-4- oder -5-(β-chlorethylsulfonyl)-phenyl-amino, 2-Hydroxy-3-sulfo-5-(β-sulfatoethylsulfonyl)-phenyl-amino, 3- oder 4-(β-Acetoxyethylsulfonyl)-phenyl-amino, 2-Methoxy-4-[β-(N-methyl-tauryl)-ethylsulfonyl]-phenyl-amino, 5-(β-Sulfatoethylsulfonyl)-naphth-2-yl-amino, 6- oder 7- oder 8-(β-Sulfatoethylsulfonyl)-naphth-2-yl-amino,6-(β-Sulfatoethylsulfonyl)-1-sulfo-naphth-2-yl-amino, 5-(β-Sulfatoethylsulfonyl)-1-sulfo-naphth-2-yl-amino, 8-(β-Sulfatoethylsulfonyl)-6-sulfo-naphth-2-yl-amino, β-[4-(β'-Sulfatoethylsulfonyl)-phen]-ethylamino, β-[2-Sulfo-4-(β'-sulfatoethylsulfonyl)-phen]-ethylamino, β-(β'-Chlorethylsulfonyl)-ethylamino, β-(β'-Sulfatoethylsulfonyl)-ethylamino, β-(Vinylsulfonyl)-ethylamino, γ-(β'-Chlorethylsulfonyl)-propylamino, γ-(β'-Sulfatoethylsulfonyl)-propylamino, γ-(β'-Bromethylsulfonyl)-propylamino, γ-(Vinylsulfonyl)-propylamino, 1-Methyl-1-(β-sulfatoethylsulfonyl)-1-ethylamino, δ-(β'-Sulfatoethylsulfonyl)-butylamino, 2-Methyl-2-(β-chlorethylsulfonyl)-1-propylamino, ω-(β'-Chlorethylsulfonyl)-pentylamino, β-(β'-Chlorethylsulfonyl)-n-hexylamino, N-Methyl-N-[β-(β'-chlorethylsulfonyl)-ethyl]-amino, N-Ethyl-N-[β-(β'-chlorethylsulfonyl)-ethyl]-amino, N-n-Propyl-N-[β-(β'-chlorethylsulfonyl)-ethyl]-amino, N-n-Butyl-N-[β-(β'-chlorethylsulfonyl)-ethyl]-amino, N-Carboxymethyl-N-[β-(β'-bromethylsulfonyl)-ethyl]-amino, N-Sulfatomethyl-N[β-(β'-chlorethylsulfonyl)-ethyl]-amino, N-(β-Carboxyethyl)-N-[γ'-(β''-chlorethylsulfonyl)-propyl]-amino, N-(β-Sulfatoethyl)-N-[γ'-(β''-chlorethylsulfonyl)-propyl]-amino, N-(β-Sulfatoethyl)-N-[δ'-(β''-chlorethylsulfonyl)-butyl]-amino, N-(β-Ethoxyethyl)-N-[δ'-(β''-chlorethylsulfonyl)-butyl]-amino, N-(γ-Chlorpropyl)-N-[β'-(β''-chlorethylsulfonyl)-ethyl]-amino, N-Phenyl-N-[β-(β'-chlorethylsulfonyl)-ethyl]-amino, N-(4-Chlorphenyl)-N-[β-(β'-chlorethylsulfonyl)-ethyl]-amino, N-(2-Methylphenyl)-N-[β-(β'-chlorethylsulfonyl)-ethyl]-amino, N-(4-Methoxyphenyl)-N-[β-(β'-chlorethylsulfonyl)-ethyl]-amino, N-(3-Sulfophenyl)-N-[β-(β'-chlorethylsulfonyl)-ethyl]-amino, N-(4-Sulfophenyl)-N-[β-(β'-chlorethylsulfonyl)-ethyl]-amino, Bis-[β-(β'-chlorethylsulfonyl)-ethyl]-amino, Bis-[β-(β'-bromethylsulfonyl)-ethyl]-amino, Bis-[γ-(β'-chlorethylsulfonyl)-propyl]-amino, Bis-[δ-(β'-chlorethylsulfonyl)-butyl]-amino, Bis-(β-vinylsulfonyl-ethyl)-amino, N-(β-Cyanoethyl)-N-[γ'-(β''-chlorethylsulfonyl)-propyl]-amino, β-[β'-(β''-Chlorethylsulfonyl)-ethylamino]-ethylamino, β-[β'-(β''-Sulfatoethylsulfonyl)-ethylamino]-ethylamino, β-[β'-(β''-Chlorethylsulfonyl)-ethoxy]-ethylamino, β-[β'-(β''-Sulfatoethylsulfonyl)-ethoxy]-ethylamino, 4-[β-(β'-Chlorethylsulfonyl)-ethyl]-piperazin-1-yl, 4-[γ-(β'-Chlorethylsulfonyl)-propyl]-piperazin-1-yl, 4-[β-(β'-Sulfatoethylsulfonyl)-ethyl]-piperazin-1-yl, 4-[γ-(β'-Sulfatoethylsulfonyl)-propyl]-piperazin-1-yl, 4-{N-[β-(4'-β'-Sulfatoethylsulfonyl-phenyl)-ethyl]-amidocarbonyl-methoxy}-phenylamino, 4-{N-[3'- oder -4'- (β-Sulfatoethylsulfonyl)-phenyl]-amidocarbonyl-methoxy}-phenylamino, 3,4-Di-(β-sulfatoethylsulfonyl)-phenylamino, 2,5-Di-(β-sulfatoethylsulfonyl)-phenylamino, 4-[γ-(β'-Sulfatoethylsulfonyl)-propoxy]-phenylamino, 2,5-Bis-[(β-sulfatoethylsulfonyl)-methyl]-phenylamino, 3- oder 4-{N-[γ-(β'-Sulfatoethylsulfonyl)-propyl-amidocarbonyl]}-phenylamino, 3,5-Bis-{N-[γ-(β'-sulfatoethylsulfonyl)-propyl-amidocarbonyl]}-phenylamino, 3-Sulfo-4-{[N-γ-(β'-sulfatoethylsulfonyl)-propyl-amidocarbonyl]-methoxy}phenylamino, 4-{[N-γ-(β'-Sulfatoethylsulfonyl)-propyl-amidocarbonyl]-methoxy}-phenylamino.

Die an den Farbstoffrest F gebundene Gruppierung der Formel (3)

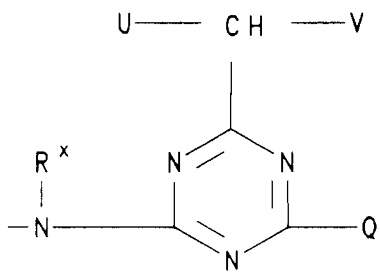

(3)

ist bevorzugt ein Rest der allgemeinen Formel (3a) oder insbesondere bevorzugt ein Rest der allgemeinen Formel (3b)

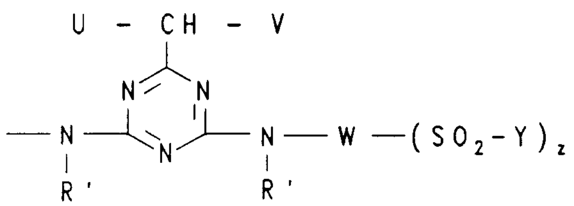

(3a)

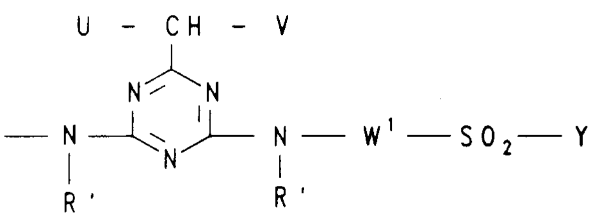

(3b)

wobei beide R' mit zueinander gleicher oder voneinander verschiedener Bedeutung jedes die Methyl- oder Ethylgruppe oder insbesondere ein Wasserstoffatom bedeuten und U, V, W, Y und z die obengenannten, insbesondere bevorzugten, Bedeutungen besitzen und $W^1$ eine Alkylengruppe von 2 bis 4 C-Atomen, bevorzugt von 2 oder insbesondere von 3 C-Atomen, bedeutet oder ein Phenylenrest ist, der durch 1 oder 2 Substituenten aus der Gruppe Methyl, Methoxy, Ethoxy und Chlor substituiert sein kann, bevorzugt hiervon der 1,3- oder 1,4-Phenylenrest ist, oder eine Gruppe der allgemeinen Formel (a)

$-(CH_2)_w-$phenylen— (a)

bedeutet, in welcher w die Zahl 1, 2, 3 oder 4, bevorzugt 2, ist und phenylen den 1,3- oder 1,4-Phenylenrest bedeutet.

Wichtige Azofarbstoffe entsprechend der allgemeinen Formel (1) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (4a) und (4b)

$D_1 - N = N - (E - N = N)_v - K_2 - Z$ (4a)

$Z - D_2 - N = N - (E - N = N)_v - K_1$ (4b)

$Z - D_2 - N = N - (E - N = N)_v - K_2 - Z$ (4c)

und die davon abgeleiteten Schwermetallkomplex-Verbindungen, wie 1:1-Kupferkomplex-Verbindungen, in welchen

- $D_1$ der Rest einer Diazokomponente der Benzol- oder Naphthalinreihe ist,
- $D_2$ der Rest einer Diazokomponente der Diaminobenzol- oder Diaminonaphthalin-Reihe ist,
- E der Rest einer Mittelkomponente der Benzol- oder Naphthalinreihe bedeutet,
- $K_1$ der Rest einer Kupplungskomponente der Benzol-, Naphthalin-, Pyrazolon-, 6-Hydroxypyridon(2)- oder Acetessigsäurearylamid-Reihe ist,
- $K_2$ ein Rest der Anilin-, Aminonaphthalin- oder 1-Aminophenyl-pyrazolon-Reihe ist,

  wobei $D_1$, $D_2$, E, $K_1$ und $K_2$ für Azofarbstoffe übliche Substitutenten, wie oben erwähnt, enthalten können, beispielsweise Hydroxy-, Amino-, Methyl-, Methoxy-, Ethoxy-, Sulfo-, Carboxy-, Ureido-, $(C_1\text{-}C_4)$-Alkylureido-, Phenylureido-, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, und zusammen mindestens eine, bevorzugt mindestens zwei, vorzugsweise drei bis fünf, Sulfogruppen, besitzen,
- v für die Zahl Null oder 1 steht und
- Z eine Gruppe der Formel (3) oder bevorzugt der Formel (3a) oder (3b) ist.

Bevorzugt sind weiterhin Disazofarbstoffe der allgemeinen Formel (4d) oder (4e)

$D_1 - N = N - K^o - N = N - D_2 - Z$ (4d)

$Z - D_2 - N = N - K^o - N = N - D_2 - Z$ (4e)

in welchen Z die obengenannte Bedeutung besitzt, $D_1$ und $D_2$, jeweils untereinander gleich oder verschieden, jedes den Rest einer Diazokomponente der Benzol- oder Naphthalinreihe bedeutet und $K^o$ den Rest einer bivalenten Kupplungskomponente der Naphthalinreihe darstellt, wobei $D_1$, $D_2$ und $K^o$ die für Azofarbstoffe üblichen Substituenten, wie die oben bereits erwähnten, tragen können, wobei $D_1$, $D_2$ und $K^o$ zusammen mindestens zwei wasserlöslich-machende Gruppen, wie Sulfo-, Carboxy-, Sulfato- und Phosphatogruppen, wie 2 bis 5 dieser Gruppen, enthalten.

Solche Azofarbstoffe der allgemeinen Formel (1) sind insbesondere Farbstoffe der allgemeinen Formeln (4f), (4g) und (4h)

$$\left[ D - N = N - ( E - N = N )_v - K \right] - Z_n \qquad (4f)$$

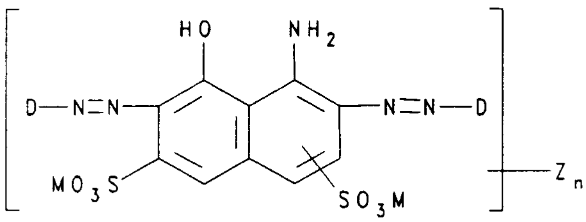

(4g)

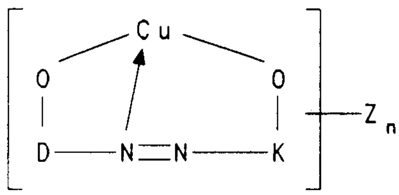

(4h)

in welchen

- Z einen Rest der allgemeinen Formel (3) oder (3a) oder (3b) bedeutet,
- n die Zahl 1 oder 2, bevorzugt 1, ist, der Rest Z an den Rest D oder den Rest K oder im Falle von n = 2 jeweils an D und K bzw. an beide D gebunden ist, wobei beide Z bevorzugt nicht gleichzeitig an ein D oder an ein K gebunden sind,
- D jeweils für den Rest einer Diazokomponente, an die noch ein Azorest gebunden sein kann, steht und die zueinander gleiche oder voneinander verschiedene Bedeutungen besitzen können, und beispielsweise einen Rest $D_1$ obiger oder nachstehender Bedeutung darstellt,
- E den bivalenten Rest einer kupplungsfähigen und diazotierbaren Verbindung, beispielsweise obiger oder nachstehender Bedeutung, bedeutet,
- K den Rest einer Kupplungskomponente, an die noch ein Azorest gebunden sein kann, darstellt, beispielsweise obiger oder nachstehender Bedeutung,
- v für die Zahl Null oder 1 steht und
- M ein Wasserstoffatom oder ein Alkalimetall, wie Natrium, Kalium oder Lithium, ist.

Bevorzugte erfindungsgemäße Metallkomplex-Azofarbstoffe sind beispielsweise Kupferkomplex-Azofarbstoffe der allgemeinen Formel (4j)

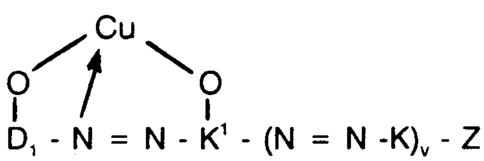

(4j)

in welcher $D_1$, K, v und Z eine der obengenannten Bedeutungen haben und $D_1$ bevorzugt ein nachstehend aus der Formel (5c) oder (5d) ersichtlicher Rest ist und $K^1$ den Rest einer ursprünglich amino- und hydroxygruppenhaltigen Kupplungskomponente bedeutet, wie bevorzugt den Rest eines gegebenenfalls durch 1 oder 2 Sulfogruppen substituierten Aminonaphthols ist, und wobei die beiden das Kupfer komplex bindenden Oxigruppen in ortho-Stellung bzw. vicinaler Stellung zur Azogruppe an $D_1$ und $K^1$ gebunden sind.

Aromatische Reste von Diazokomponenten, die keine faserreaktive Gruppe der Formel (3) tragen, wie von solchen, die den allgemeinen Formeln $D\text{-}NH_2$ bzw. $D_1\text{-}NH_2$ bzw. $R^G\text{-}D\text{-}NH_2$ entsprechen, sind beispielsweise solche der allgemeinen Formel (5a), (5b), (5c) und (5d)

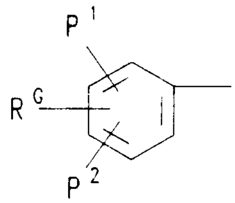

(5a)

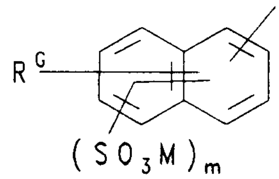

(5b)

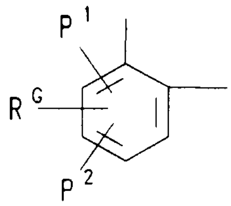

(5c)

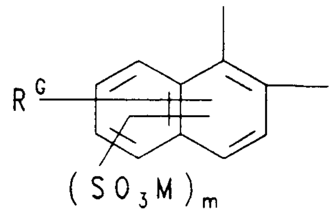

(5d)

in welchen

$R^G$ Wasserstoff, Sulfo oder eine Gruppe der allgemeinen Formel Y-$SO_2$- mit Y der obigen Bedeutung ist, wobei die Gruppe Y-$SO_2$- an den aromatischen Kern über eine Alkylengruppe von 1 bis 4 C-Atomen, wie Methylen- oder Ethylengruppe, oder über eine Alkylenaminogruppe von 2 bis 4 C-Atomen, wie n-Propylenamino- oder Ethylenamino-Gruppe, oder über eine durch 1 oder 2 Sauerstoffatome unterbrochene Alkylengruppe von 3 bis 6 C-Atomen, wie eine Ethylen-oxy-ethylen-Gruppe, oder über eine Alkylenoxy-Gruppe von 2 bis 4 C-Atomen oder über eine Alkylen-aminocarbonyl-Gruppe mit einem Alkylenrest von 2 bis 4 C-Atomen, wie eine n-Propylenaminocarbonyl-Gruppe, oder über eine N-($C_1$-$C_4$-Alkyl)-amino-Gruppe, wie die N-Methylamino-Gruppe, gebunden sein kann,

$P^1$ Wasserstoff, Methyl, Ethyl, Methoxy, Ethoxy, Alkanoyl von 2 bis 5 C-Atomen, wie Acetyl und Propionyl, Cyano, Sulfo, Carboxy, Alkoxycarbonyl von 2 bis 5 C-Atomen, wie Methoxycarbonyl und Ethoxycarbonyl, Carbamoyl, N-($C_1$-$C_4$-Alkyl)-carbamoyl, Fluor, Chlor, Brom oder Trifluormethyl ist,

$P^2$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-($C_1$-$C_4$-Alkyl)-sulfamoyl, Sulfophenylamidocarbonyl oder Phenylamidocarbonyl mit einer Gruppe Y-$SO_2$- mit Y obiger Bedeutung als Substituent im Phenylrest, Alkylsulfonyl von 1 bis 4 C-Atomen, Phenylsulfonyl oder Phenoxy ist,

wobei der Benzolkern in Formel (5a) und (5b) zusätzlich in ortho-Stellung zur freien Bindung, die an die Azogruppe führt, eine Hydroxygruppe enthalten kann,

m die Zahl Null, 1 oder 2 bedeutet (wobei diese Gruppe im Falle von m gleich Null ein Wasserstoffatom bedeutet) und

M die obengenannte Bedeutung hat.

Bevorzugt ist hiervon $P^1$ gleich Wasserstoff, Methyl, Methoxy, Brom, Chlor, Sulfo und Carboxy sowie $P^2$ gleich Wasserstoff, Methyl, Methoxy, Chlor, Carboxy, Sulfo und Acetylamino.

Gruppen der allgemeinen Formel (5a) und (5b) sind beispielsweise:

2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Ethoxy-4- oder -5-(β-sulfatoethylsulfonyl)-phenyl, 2-Ethyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4- oder -5-(β-sulfatoethylsulfonyl)-phenyl, 2-Chlor-4- oder -5-(β-chlorethylsulfonyl)-phenyl, 2-Hydroxy-3-sulfo-5-(β-sulfatoethylsulfonyl)-phenyl, 3- oder 4-(β-Acetoxyethylsulfonyl)-phenyl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl, 5-(β-Sulfatoethylsulfonyl)-1-sulfo-naphth-2-yl, 8-(β-Sulfatoethylsulfonyl)-6-sulfo-naphth-2-yl, 3- oder 4-{β-[4-(β'-Sulfatoethylsulfonyl)-phen]-ethylamino}-phenyl, 3- oder 4-{β-[2-Sulfo-4-(β'-sulfatoethylsulfonyl)-phen]-ethylamino}-phenyl, 3- oder 4-[β-(β'-Chlorethylsulfonyl)-ethylamino]-phenyl, 3- oder 4-[β-(β'-Sulfatoethylsulfonyl)-ethylamino]-phenyl, 3- oder 4-[β-(Vinylsulfonyl)-ethylamino]-phenyl, 3- oder 4-[γ-(β'-Chlorethylsulfonyl)-propylamino]-phenyl, 3- oder 4-[γ-(β'-Sulfatoethylsulfonyl)-propylamino]-phenyl, 3-oder 4-[γ-(Vinylsulfonyl)-propylamino]-phenyl, 3,4-Di-(β-sulfatoethylsulfonyl)-phenyl, 2,5-Di-(β-sulfatoethylsulfonyl)-phenyl, 4-[γ-(β'-Sulfatoethylsulfonyl)-propoxy]-phenyl, 2,5-Bis-[(β-sulfatoethylsulfonyl)-methyl]-phenyl, 3- oder 4-{N-[γ-(β'-Sulfatoethylsulfonyl)-propyl-amidocarbonyl]}-phenyl, 3,5-Bis-{N-[γ-(β'-sulfatoethylsulfonyl)-propyl-amidocarbonyl]}-phenyl, 3-Sulfo-4-{[N-γ-(β'-sulfatoethylsulfonyl)-propyl-amidocarbonyl]-methoxy}-phenyl und 4-{[N-γ-(β'-Sulfatoethylsulfonyl)-propyl-amido-carbonyl]-methoxy}-phenyl, des weiteren 2-Carboxy-phenyl, 4-Carboxy-phenyl, 3-Carboxy-phenyl, 3-Chlor-6-carboxy-phenyl, 2-Sulfo-phenyl, 3-Sulfo-phenyl, 4-Sulfo-phenyl, 2,5-Disulfo-phenyl, 2,4-Disulfo-phenyl, 3,5-Disulfo-phenyl, 2-Methyl-5-sulfo-phenyl, 2-Methoxy-5-sulfo-phenyl, 2-Methoxy-4-sulfo-phenyl, 3-Sulfo-4-methoxy-phenyl, 5-Sulfo-2-ethoxy-phenyl, 4-Sulfo-2-ethoxy-phenyl, 2-Carboxy-5-sulfo-phenyl, 2,5-Dimethoxy-4-sulfo-phenyl, 2,4-Dimethoxy-5-sulfo-phenyl, 2-Methoxy-5-methyl-4-sulfo-phenyl, 2-Sulfo-4-methoxy-phenyl, 2-Sulfo-4-methyl-phenyl, 2-Methyl-4-sulfo-phenyl, 2-Chlor-4-sulfo-phenyl, 2-Chlor-5-sulfo-phenyl, 2-Brom-4-sulfo-phenyl, 2,6-Dichlor-4-sulfo-phenyl, 2,6-Dimethyl-3-sulfo-phenyl, 2,6-Dimethyl-4-sulfo-phenyl, 3-Acerylamino-6-sulfo-phenyl, 4-Acetylamino-2-sulfo-phenyl, 4-Sulfo-naphth-1-yl, 3-Sulfo-naphth-1-yl, 5-Sulfo-naphth-1-yl, 6-Sulfo-naphth-1-yl, 7-Sulfo-naphth-1-yl, 3,7-Disulfo-naphth-1-yl, 3,6,8-Trisulfo-naphth-1-yl, 4,6,8-Trisulfo-naphth-1-yl, 5-Sulfo-naphth-2-yl, 6- oder 8-Sulfo-naphth-2-yl, 3,6,8-Trisulfo-naphth-2-yl, 6,8-Disulfo-naphth-2-yl, 1,6-Disulfo-naphth-2-yl, 1-Sulfo-naphth-2-yl, 1,5-Disulfo-naphth-2-yl, 3,6-Disulfo-naphth-2-yl und 4,8-Disulfo-naphth-2-yl.

Aromatische Reste Z-D- bzw. Z-$D_2$- von als Diazokomponenten dienenden Verbindungen der allgemeinen Formeln Z-D-$NH_2$ bzw. Z-$D_2$-$NH_2$ oder von deren Diaminobenzol- und Diaminonaphthalin-Verbindungen entsprechend den allgemeinen Formeln $H_2N$-D-$NH_2$ bzw. $H_2$-N-$D_2$-$NH_2$ sind bevorzugt Reste der allgemeinen Formeln (6a) und (6b)

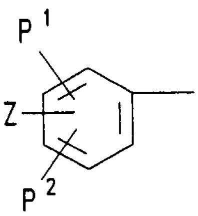 (6a) 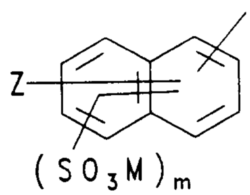 (6b)

in welchen Z, M, m, $P^1$ und $P^2$ die oben angegebenen, insbesondere bevorzugten Bedeutungen haben, wobei der Benzolkern in ortho-Stellung zur freien Bindung, die zur Azogruppe führt, zusätzlich eine Hydroxygruppe enthalten kann.

Aromatische Reste E einer kupplungsfähigen und diazotierbaren Verbindung der allgemeinen Formel H-E-$NH_2$ sind beispielsweise solche der allgemeinen Formeln (7a), (7b) und (7c)

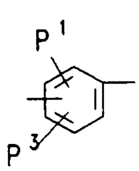 (7a) 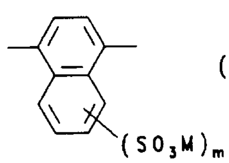 (7b) 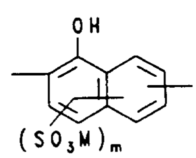 (7c)

in welchen

| | |
|---|---|
| $P^1$, M und m | die oben angegebenen Bedeutungen haben und |
| $P^3$ | Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist. |

Reste K bzw. $K_1$ von Kupplungskomponenten der allgemeinen Formel H-K bzw. H-$K_1$ , die keine faserreaktive Gruppe der Formel (3) tragen, sind beispielsweise solche der allgemeinen Formeln (8a) bis (8h)

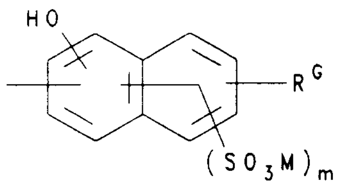 (8a)

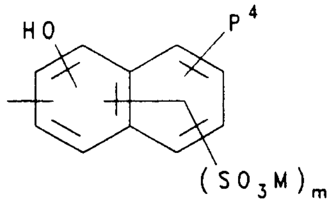 (8b)

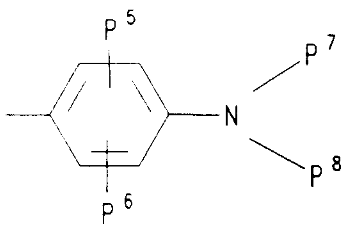 (8c)

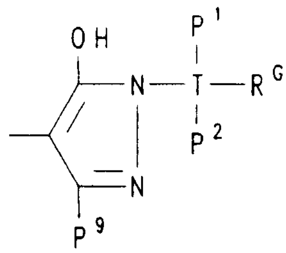 (8d)

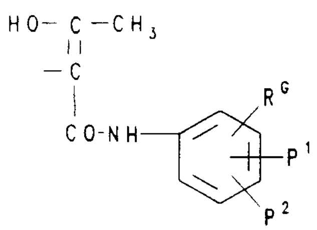 (8e)

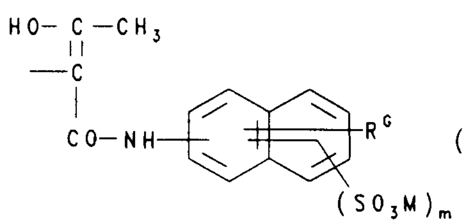 (8f)

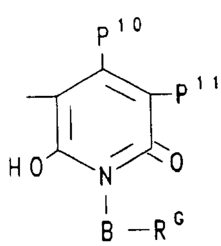 (8g)

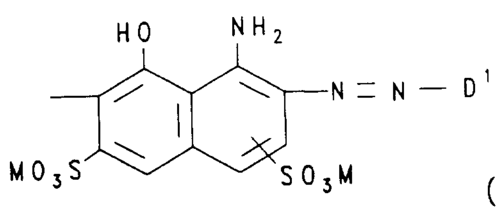 (8h)

in welchen

| | |
|---|---|
| $R^G$, $P^1$, $P^2$, m und M | die obengenannten Bedeutungen haben, |
| $P^4$ | Phenylureido ist, das im Phenylrest durch Substituenten aus der Gruppe Chlor, Methyl, Methoxy, Sulfo, Carboxy und eine Gruppe - $SO_2$-Y mit Y der obigen Bedeutung substituiert sein kann, oder Benzoylamino ist, das im Benzolrest durch Substituenten aus der Gruppe Chlor, Methyl, Methoxy, Nitro, Sulfo, Carboxy und eine Gruppe -$SO_2$-Y mit Y der obigen Bedeutung substituiert sein kann, |
| $P^5$ | Wasserstoff, Alkyl von 1 bis 4 C-Atomen, wie Methyl und Ethyl, Alkoxy von 1 bis |

4 C-Atomen, wie Methoxy und Ethoxy, Brom, Chlor oder Alkanoylamino von 2 bis 7 C-Atomen, wie Acetylamino und Propionylamino, ist,

$P^6$ Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist,

$P^7$ Wasserstofff oder Alkyl von 1 bis 4 C-Atomen ist, das durch Hydroxy, Cyano, Carboxy, Sulfo, Sulfato, Methoxycarbonyl, Ethoxycarbonyl oder Acetoxy oder eine Gruppe $-SO_2-Y$ obiger Definition substituiert sein kann,

$P^8$ Alkyl von 1 bis 4 C-Atomen ist, das durch Hydroxy, Cyano, Carboxy, Sulfo, Sulfato, Methoxycarbonyl, Ethoxycarbonyl oder Acetoxy oder durch eine Gruppe $-SO_2-Y$ obiger Definition substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist, wobei jeweils der Phenylrest durch eine Gruppe $-SO_2-Y$ obiger Definition substituiert sein kann,

$P^9$ Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist

T für einen Benzol- oder Naphthalinring, bevorzugt Benzolring, steht,

$P^{10}$ Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen oder Phenyl ist, bevorzugt Alkyl von 1 bis 4 C-Atomen ist,

$P^{11}$ Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,

B Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und

$D^1$ ein Rest der allgemeinen Formel (5a) oder (5b) ist.

Reste -K-Z bzw. $-K_2-Z$ von Kupplungskomponenten der allgemeinen Formel H-K-Z und $H-K_2-Z$ bzw. $H-K-N(R^x)H$ und $H-K_2-N(R^x)H$ , in die der faserreaktive Rest entsprechend der später angegebenen Gruppierung $Z^1$ nachträglich eingeführt werden muß, sind beispielsweise Reste der allgemeinen Formeln (9a) bis (9h)

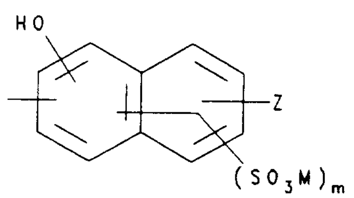

(9a)

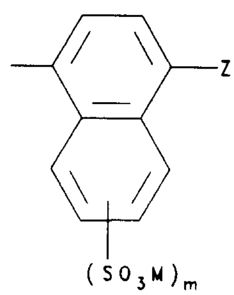

(9b)

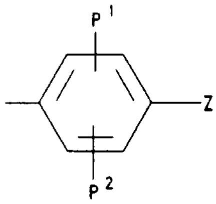

(9c)

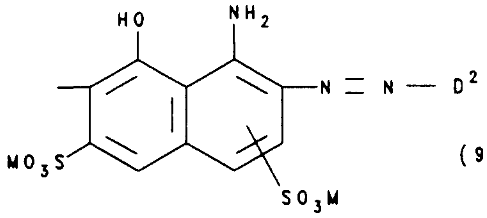

(9d)

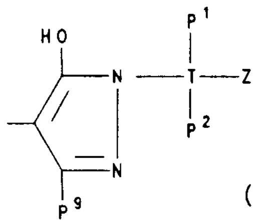

(9e)

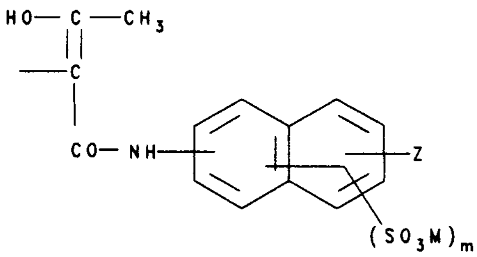

(9f)

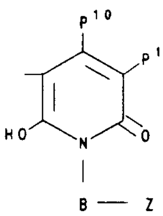

(9g)

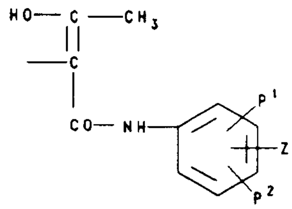

(9h)

in welchen
R, $P^1$, $P^2$, $P^9$, $P^{10}$, $P^{11}$, B, T, M, m und Z die oben angegebenen, insbesondere bevorzugten, Bedeutungen haben und

$D^2$ als Rest einer Diazokomponente ein Rest der obengenannten und definierten allgemeinen Formel (6a) oder (6b) ist.

In den obigen Formeln (8a), (8b) und (9a) steht die freie Bindung, die zur Azogruppe führt, in ortho-Stellung zur Hydroxygruppen an den aromatischen Kern gebunden.

Reste K bzw. $K^1$ in den Formeln (4h) und (4j) mit einem metallkomplex-bindenden Sauerstoffatom, die die Gruppe Z enthalten, sind insbesondere solche der Formeln (10a) bis (10e)

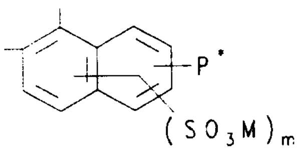

(10a)

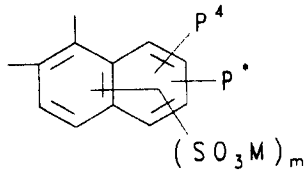

(10b)

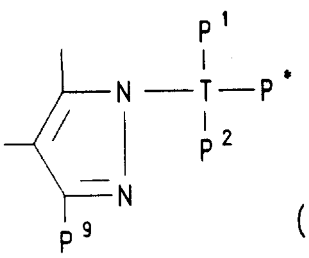

(10c)

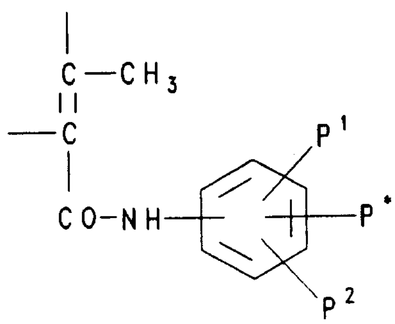

(10d)

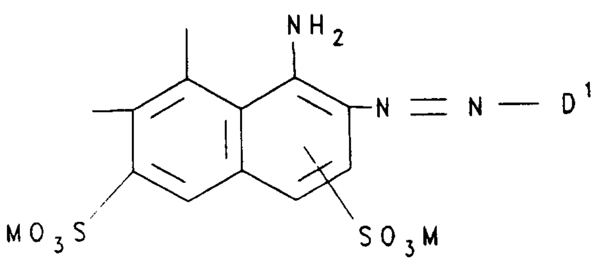

(10e)

in welchen die einzelnen Formelglieder eine der obengenannten Bedeutungen haben und P* entweder einen Rest Z oder eine Gruppierung der Formel -N = N-K-Z bedeutet.

Von den Azofarbstoffen sind weiterhin bevorzugt solche, die den allgemeinen Formeln (12A) bis (12R)

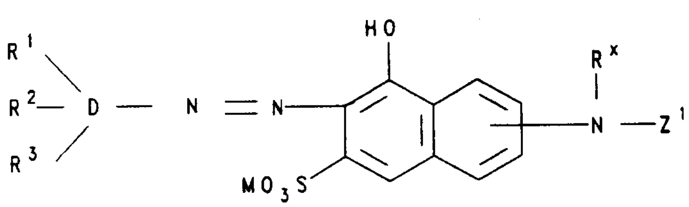

(12A)

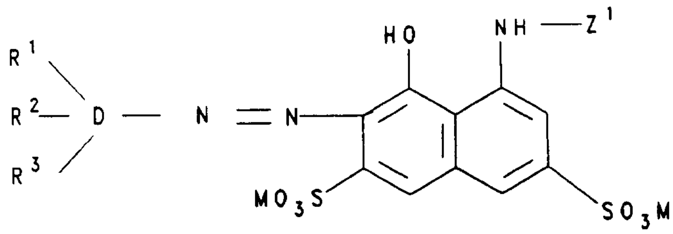

(12B)

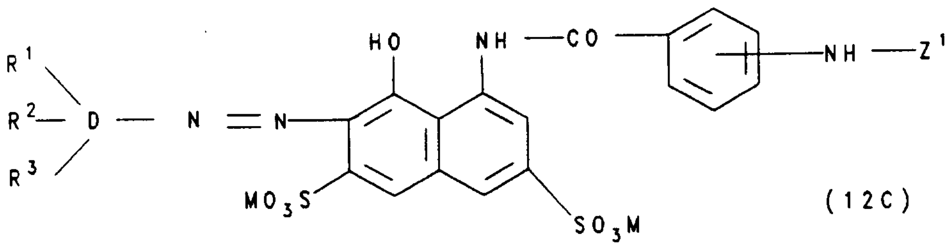

(12C)

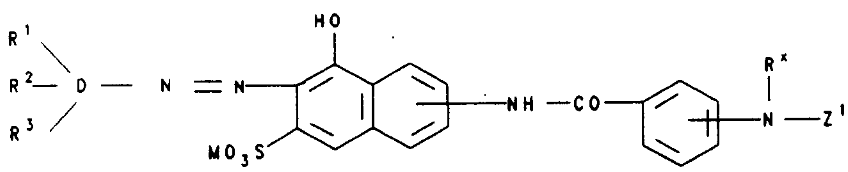

(12D)

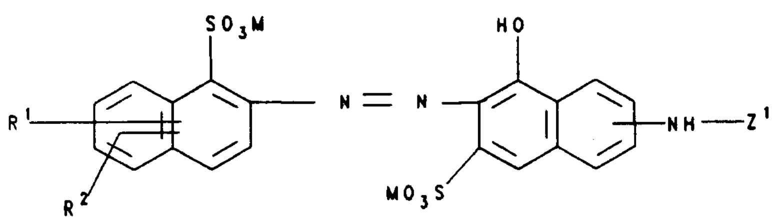

(12E)

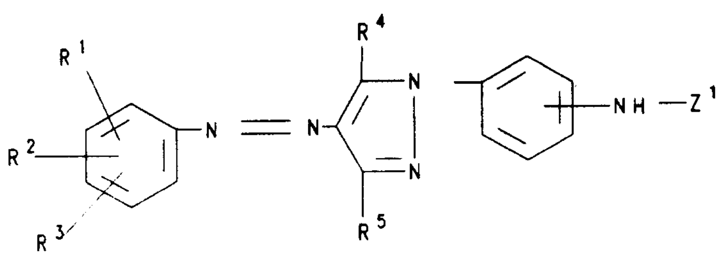

(12F)

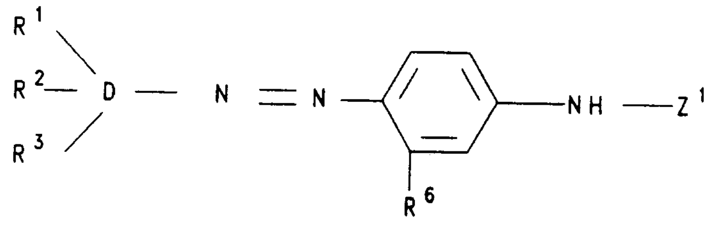

(12G)

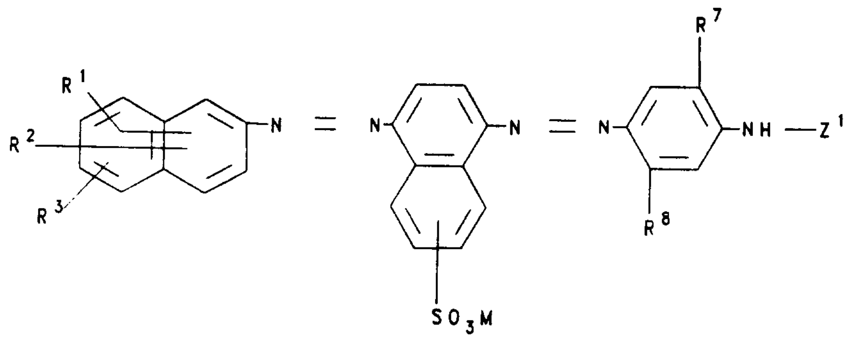

(12H)

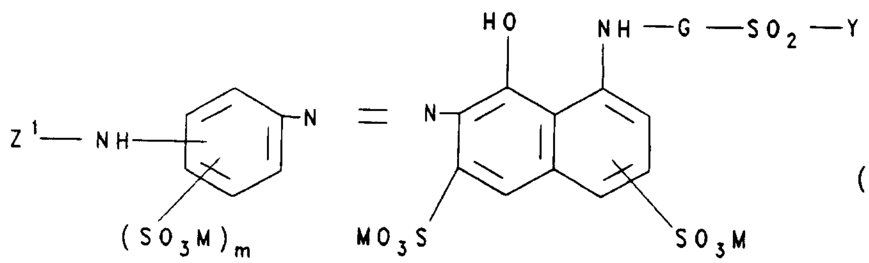

(12J)

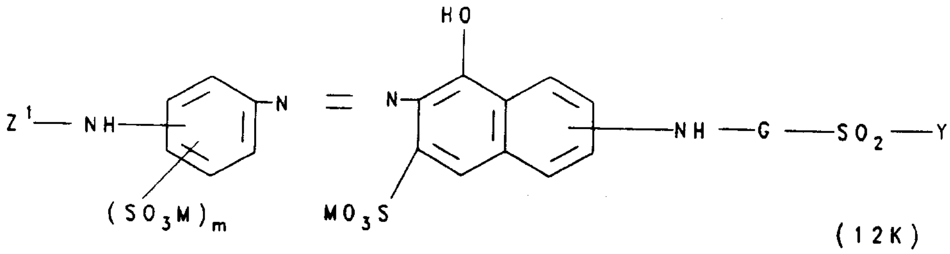

(12K)

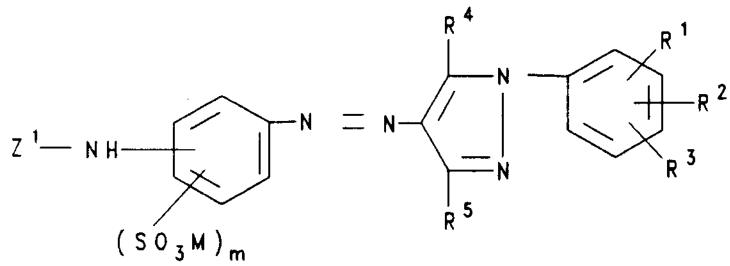

(12L)

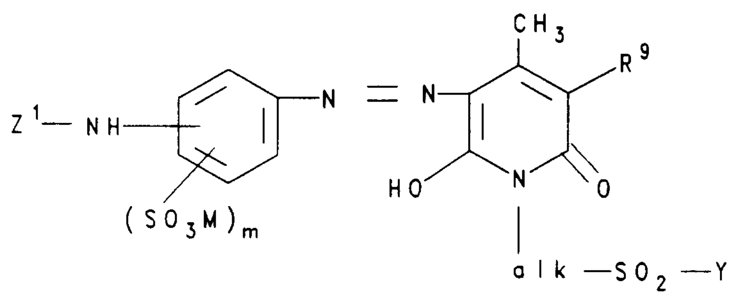

(12M)

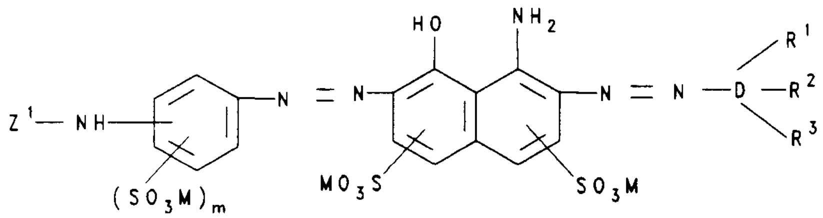

(12N)

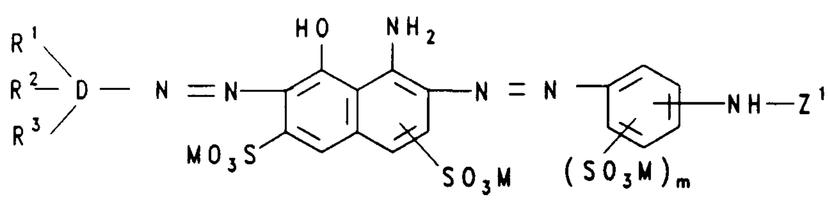

(12P)

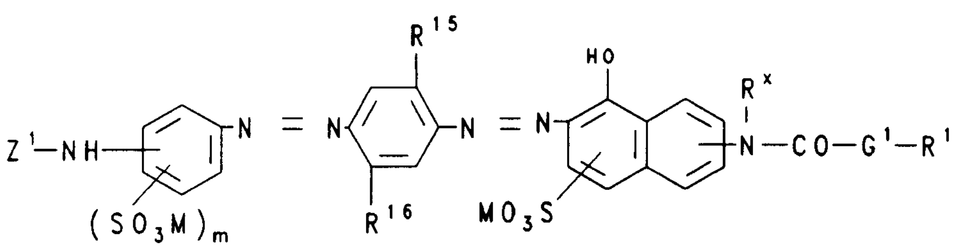

(12Q)

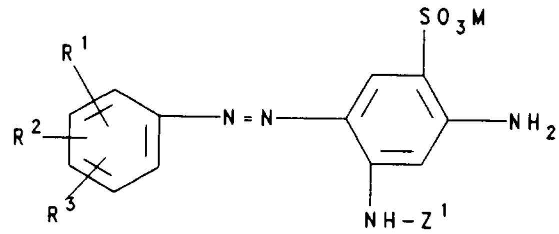

(12R)

entsprechen, in welchen bedeuten:

- $Z^1$ ist ein Rest der Formel (3A), (3B) oder (3C)

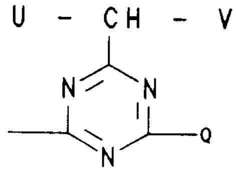

(3A)

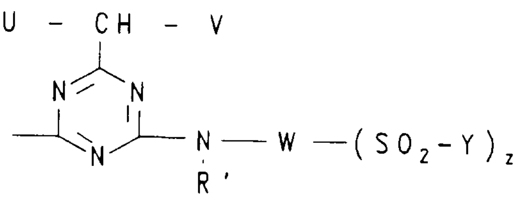

(3B)

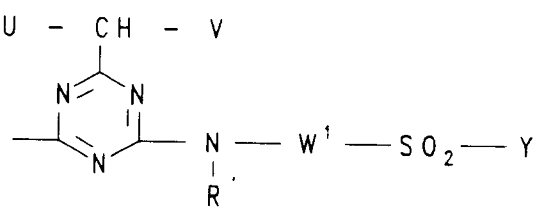

(3C)

in welchen U, V, $R^x$, Q, R', W, Y, Z und W die obengenannten, insbesondere bevorzugten, Bedeutungen haben;

- M hat eine der obengenannten Bedeutungen;
- $R^x$ ist Wasserstoff oder Alkyl von 1 bis 4 C-Atomen, wie Methyl oder Ethyl;
- D ist ein Benzolring oder ist ein Naphthalinring, wobei die Azogruppe an den Naphthalinring bevorzugt in $\beta$-Stellung gebunden ist und wobei im Falle, daß D den Naphthalinring bedeutet, $R^2$ und $R^3$ bevorzugt jedes, unabhängig voneinander, ein Wasserstoffatom oder eine Sulfogruppe bedeuten;
- $R^1$ ist Wasserstoff, Sulfo, $\beta$-Sulfatoethylsulfonyl, $\beta$-Chlorethylsulfonyl oder Vinylsulfonyl;
- $R^2$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy, Sulfo, oder eine Gruppe der Formel $-SO_2-Y$ mit Y der obengenannten Bedeutung, wie $\beta$-Sulfatoethylsulfonyl, $\beta$-Chlorethylsulfonyl oder Vinylsulfonyl und ist bevorzugt Wasserstoff;
- $R^3$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff;
- $R^4$ ist Hydroxy oder Amino, bevorzugt Hydroxy;
- $R^5$ ist Methyl, Carboxy, Carbomethoxy oder Carbethoxy, bevorzugt Methyl oder Carboxy;
- $R^6$ ist Acetylamino, Ureido oder Methyl;

R[7] ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy, Ethoxy oder Chlor;

R[8] ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;

R[9] ist Wasserstoff, Cyano, Carbamoyl, Sulfamoyl oder Sulfomethyl, bevorzugt Wasserstoff oder Carbamoyl;

R[10] ist Cyano, Carbamoyl oder Sulfomethyl;

alk ist Alkylen von 2 bis 4 C-Atomen, vorzugsweise Ethylen;

G ist Alkylen von 2 bis 4 C-Atomen, vorzugsweise n-Ethylen oder insbesondere n-Propylen, oder ist Carbonylphenylen;

G[1] ist Phenylen oder ist ein Rest der Formel $-NH-(CH_2)_3-$ ;

m ist die Zahl Null, 1 oder 2 (wobei im Falle von m gleich Null diese Gruppe Wasserstoff ist);

q steht für die Zahl Null oder 1 (wobei im Falle von q gleich Null diese Gruppe Wasserstoff bedeutet);

t steht für die Zahl 2 oder 3;

in den Verbindungen der Formeln (12A), (12D), (12E), (12K) und (12Q) steht die Aminogruppierung in 2- oder 3-Stellung an den 8-Naphthol-Rest gebunden.

Von den erfindungsgemäßen Anthrachinonfarbstoffen sind insbesondere diejenigen zu erwähnen, die der allgemeinen Formel (13)

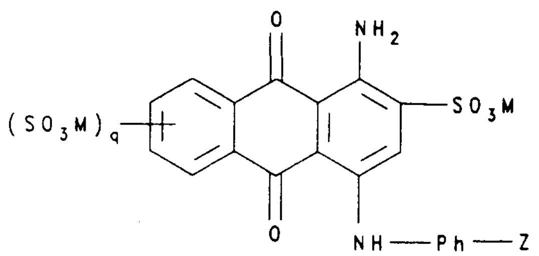

(13)

entsprechen, in welcher

M, Z und q eine der obengenannten Bedeutungen haben und

Ph ein Phenylenrest ist, der durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann.

Von den erfindungsgemäßen Triphendioxazinfarbstoffen sind diejenigen hervorzuheben, die der allgmeinen Formel (14)

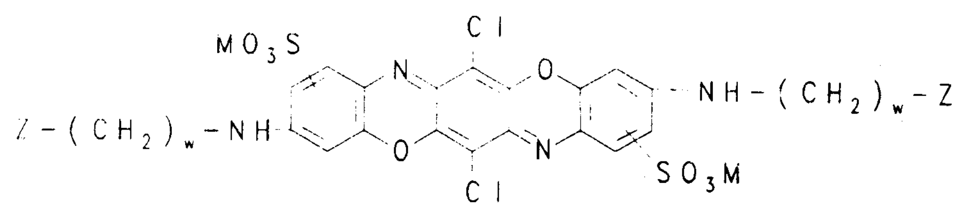

(14)

entsprechen, in welcher M und Z eine der obengenannten Bedeutungen haben und w für die Zahl 2, 3 oder 4 steht, wobei die beiden Sulfogruppen $-SO_3M$ bevorzugt in ortho-Stellung zum Sauerstoffatom des heterocyclischen Ringes an den Benzolkern gebunden sind.

Von den erfindungsgemäßen Phthalocyaninfarbstoffen sind diejenigen bevorzugt, die der allgemeinen Formel (15)

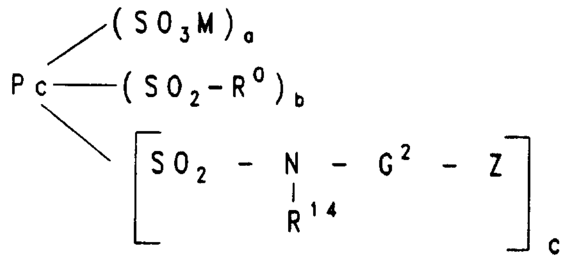 (15)

entsprechen, in welcher bedeuten:

- Pc ist der Rest eines Kupfer- oder Nickelphthalocyanins;
- $R^o$ ist eine Aminogruppe der Formel $-NR^{11}R^{12}$, in welcher $R^{11}$ und $R^{12}$ unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest, wie der Morpholino- oder Piperidino-Rest;
- $R^{14}$ ist ein Wasserstoff oder Alkyl von 1 bis 4 C-Atomen, wie Methyl und Ethyl;
- $G^2$ ist Phenylen, das durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, beispielsweise Sulfophenylen, oder ist Alkylen von 2 bis 6 C-Atomen, wie Ethylen;
- Z ist die faserreaktive Gruppe der Formel (3) oder bevorzugt (3a) oder (3b);
- a ist eine Zahl von Null bis 3,
- b ist eine Zahl von Null bis 3 und
- c ist eine Zahl von 1 bis 2,

wobei die Summe von (a + b + c) gleich einer Zahl von 2 bis 4 ist.

Erfindungsgemäße Kupferformazanfarbstoffe sind insbesondere diejenigen, die der allgemeinen Formel (16)

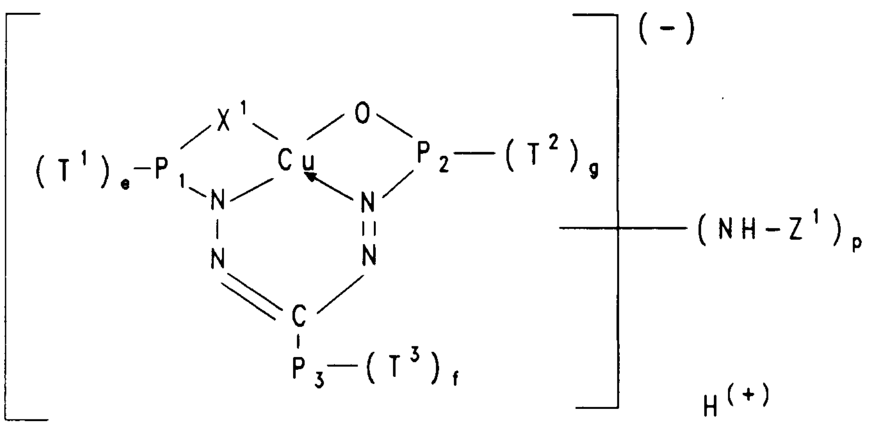 (16)

entsprechen, in welcher bedeuten:

- $X^1$ ist ein Sauerstoffatom oder bevorzugt die Carbonyloxygruppe der Formel -COO- ;
- $P_1$ und $P_2$ bedeuten, unabhängig voneinander, jedes einen Benzol- oder Naphthalinring, wobei $P_1$ das Stickstoffatom und die Gruppe X ortho-ständig zueinander und $P_2$ das Sauerstoffatom und das Stickstoffatom ortho-ständig zueinander gebunden enthalten und die Benzolkerne bzw. Napthalinkerne noch durch einen oder zwei Substituenten aus der Gruppe Halogen, wie Chlor, Nitro, Alkyl von 1 bis 4 C-Atomen, wie Ethyl und Methyl, Alkoxy von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können, wobei sowohl $P_1$ als auch $P_2$ beide bevorzugt einen Benzolring bedeuten;
- $P_3$ ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die durch 1 oder 2 Substituenten

aus der Gruppe Methyl, Ethyl, Methoxy, Ethoxy und Chlor substituiert sein können, wobei $P_3$ bevorzugt ein Benzolring ist;

$T^1$, $T^2$ und $T^3$ bedeuten, unabhängig voneinander, jedes eine Sulfo- oder Carboxygruppe, bevorzugt Sulfogruppe;

e, f und g stellen, unabhängig voneinander, jedes die Zahl Null, 1 oder 2 dar, wobei die Summe von (e+f+g) eine ganze Zahl von 1 bis 4 bedeutet und vorzugsweise 2 oder 3, insbesondere 2, ist, wobei im Falle von e oder f oder g gleich Null die Gruppe $T^1$ bzw. $T^2$ bzw. $T^3$ ein Wasserstoffatom bedeutet;

p steht für die Zahl 1 oder 2, bevorzugt 1, wobei die Gruppe - NH-Z an einen aromatischen Rest von $P_1$, $P_2$ oder $P_3$ gebunden sein kann und bevorzugt an $P_2$ gebunden ist.

Bevorzugt sind von den Kupferformazanfarbstoffen der allgemeinen Formel (16) diejenigen, in welchen $P_1$ und $P_2$ beide für einen Benzolring stehen, die Gruppe -NH-Z an $P_2$ gebunden ist und $T^1$ und $T^2$ jedes eine Sulfogruppe bedeutet, wobei e und g beide für die Zahl 1 stehen. Sofern die Gruppe -NH-Z an $P_1$ gebunden ist, ist e die Zahl Null, g die Zahl 2 und $T^2$ eine Sulfogruppe. Bevorzugt ist weiterhin die Gruppierung $-P_3-(T^3)_f$ der Phenyl- oder ein 2- oder 4-Sulfo-phenyl-Rest.

Die vorliegende Erfindung betrifft weiterhin Verfahren zur Herstellung der erfindungsgemäßen Farbstoffe der allgemeinen Formel (1). Sie lassen sich in an und für sich in üblicher Weise analog bekannten, für die jeweiligen Farbstoffklasse spezifischen Synthesewegen herstellen, indem man für den jeweiligen Farbstoff typische Vorprodukte, von denen mindestens eines eine Gruppe der allgemeinen Formel (3) und mindestens eines eine Gruppe der allgemeinen Formel (5) enthält, miteinander umsetzt, oder indem man von einer aminogruppenhaltigen Ausgangsverbindung der allgemeinen Formel (20)

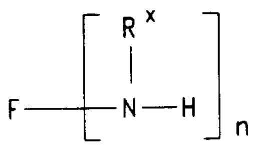

(20)

in welcher F, $R^x$ und n die obengenannten Bedeutungen haben, ausgeht und ein Trihalogen-s-triazin der allgemeinen Formel (21)

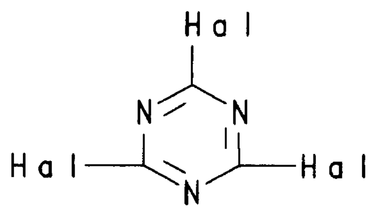

(21)

in welcher Hal für ein Halogenatom, wie insbesondere Chlor- oder Fluoratom, steht, mit dieser, mit einer Verbindung der allgemeinen Formel H-Q und einer Verbindung der allgemeinen Formel $U^*-CH_2-V$ , in welcher Q und V die obengenannten Bedeutungen haben und $U^*$ die Bedeutung von U, ausgenommen ein Wasserstoffatom, besitzt, in stöchiometrischen Mengen in beliebiger Reihenfolge miteinander umsetzt (wobei in allen Fällen bei den Ausgangsverbindungen die Gruppe Y auch eine $\beta$-Hydroxyethyl-Gruppe sein kann), und daß man gegebenenfalls anschließend weitere, dem Fachmann geläufige, erforderliche Umwandlungsreaktionen durchführt, wie bspw. beim Einsatz von Ausgangsverbindungen, die statt der Gruppe Y die $\beta$-Hydroxyethyl-Gruppe enthalten, die anschließende Überführung der erhaltenen Verbindung mit der $\beta$-Hydroxyethylsulfonyl-Gruppe in den erfindungsgemäßen Farbstoff mit einer Gruppe $Y-SO_2-$ der für Formel (1) genannten Bedeutung.

Insbesondere lassen sich die erfindungsgemäßen Farbstoffe erfindungsgemäß herstellen, indem man eine Verbindung entsprechend der allgemeinen Formel (22)

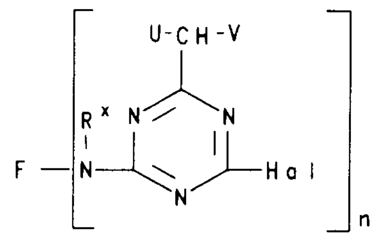

(22)

in welcher F, $R^x$, U, V und n die obengenannte Bedeutungen habe und Hal für ein Halogenatom, wie insbesondere ein Chlor- oder Fluoratom, steht, mit einer Verbindung der allgemeinen Formel H-Q umsetzt, oder daß man eine Verbindung der allgemeinen Formel (20) mit einer Verbindung der allgemeinen Formel (23)

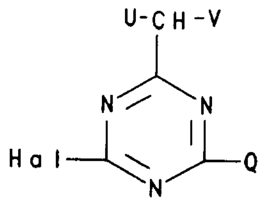

(23)

mit Hal, U, V und Q der obengenannten Bedeutung umsetzt, wobei jeweils in den Ausgangsverbindungen enthaltene Gruppen Y auch eine $\beta$-Hydroxyethyl-Gruppe sein können, die anschließend, wie oben angegeben, in die für Formel (1) definierte Gruppe Y überführt wird.

Die Umsetzungen der Ausgangsverbindungen erfolgen im wäßrigen oder wäßrigorganischen Medium in Suspension oder Lösung. Führt man die Umsetzungen in einem wäßrig-organischen Medium durch, so ist das organische Medium beispielsweise Aceton, Dimethylformamid und N-Methyl-pyrrolidon. Vorteilhaft wird der bei der Kondensation freiwerdende Halogenwasserstoff laufend durch Zugabe wäßriger Alkalihydroxide, -carbonate oder -bicarbonate neutralisiert.

Die Umsetzungen der Verbindungen der allgemeinen Formel (22) mit einer Verbindung der Formel H-Q werden in der Regel bei einem pH-Wert zwischen 2 und 5, bevorzugt zwischen 3 und 4, und bei einer Temperatur zwischen 30 und 90 °C, bevorzugt zwischen 40 und 80 °C, durchgeführt, und die Umsetzungen der Verbindungen der allgemeinen Formel (20) mit einer Halogentriazinverbindung der allgemeinen Formel (23) erfolgen in der Regel bei einem pH-Wert zwischen 3 und 6, bevorzugt zwischen 4 und 5, und bei einer Temperatur zwischen 30 und 90 °C, bevorzugt zwischen 40 und 80 °C.

Die Herstellung der Triazin-Ausgangsverbindungen kann analog den Angaben der US-Patentschriften Nrs. 3 205 218 und 4 247 692 erfolgen. In der Regel werden die Ausgangsverbindungen der allgemeinen Formel (22) durch Umsetzung einer aminogruppenhaltigen Ausgangsverbindung der allgemeinen Formel (20) mit einer Dihalogentriazinverbindung der allgemeinen Formel (24)

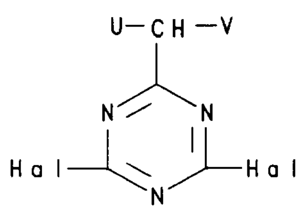

(24)

mit Hal, U und V der obengenannten Bedeutung bei einem pH-Wert zwischen 7 und 12, bevorzugt zwischen 7,5 und 10, und bei einer Temperatur zwischen 0 und 20 °C, bevorzugt zwischen 0 und 5 °C, hergestellt.

Ebenso erhält man die Ausgangsverbindungen der allgemeinen Formel (23), indem man ein Trihalogen-s-triazin, wie Cyanurchlorid oder Cyanurfluorid, mit einer Verbindung der allgemeinen Formel H-Q und einer Verbindung der allgmeinen Formel $U^*-CH_2-V$ , in welchen Q und V die obengenannten Bedeutungen besitzen und U* die Bedeutung von U, ausgenommen ein Wasserstoffatom, hat, in beliebiger Reihenfolge

umsetzt, wobei man jedoch bevorzugt das Trihalogen-s-triazin mit derjenigen Verbindung zuerst umsetzt, die die geringste Basizität besitzt, was in der Regel die Verbindung der Formel $U^*-CH_2-V$ ist. Hierbei erfolgt die Umsetzung des Trihalogen-s-triazins mit der Verbindung der Formel $U^*-CH_2-V$ in der Regel bei einem pH-Wert zwischen 7,0 und 12, bevorzugt zwischen 7,5 und 10, und bei einer Temperatur zwischen 0 und 20 °C, bevorzugt zwischen 0 und 5 °C, und die anschließende Umsetzung mit der Verbindung H-Q in der Regel bei einem pH-Wert zwischen 2 und 5, bevorzugt zwischen 2,5 und 4, und bei einer Temperatur zwischen 0 und 30 °C, bevorzugt zwischen 5 und 25 °C.

Die Ausgangsamine der allgemeinen Formel H-Q sind zahlreich in der Literatur beschrieben, so beispielsweise in den Deutschen Patentschriften Nrs. 887 505 und 965 902, in den Deutschen Offenlegungsschriften Nrs. 2 040 620 und 2 614 550 und in den Europäischen Patentanmeldungs-Veröffentlichungen Nrs. 0 107 614, 0 144 766, 0 159 292 und 0 278 904.

Welche der obengenannten Verfahrensweisen sowohl bei der Synthese der Farbstoffe der allgemeinen Formel (1) als auch bei der Synthese der Ausgangsverbindungen mit einem Triazinrest mit Vorteil angewendet werden können, hängt zum einen von der Löslichkeit der eingesetzten Ausgangsverbindungen und der Zwischenprodukte ab sowie von den zu wählenden Reaktionsbedingungen hinsichtlich der Basizität der Reaktanten zu einer der Trihalogen- bzw. Dihalogen- bzw. Monohalogen-s-triazin-Verbindung ab und kann von Fall zu Fall durch einen kleinen Vorversuch entschieden werden. Die erfindungsgemäße Herstellung der Farbstoffe der allgemeinen Formel (1) durch Umsetzung einer Verbindung der allgemeinen Formel (22) mit einer Verbindung der Formel H-Q ist in demjenigen Falle besonders geeignet, wenn die Ausgangsverbindung (22) eine alkaliempfindliche Gruppe, wie beispielsweise eine besonders alkaliempfindliche faserreaktive Gruppe $-SO_2-Y$ enthält und die Umsetzung mit der Verbindung H-Q unter sauren oder neutralen Bedingungen ausgeführt werden kann.

Läßt sich dagegen die Gruppe Q nur unter alkalischen Bedingungen in das Farbstoffmolekül mit einer alkaliempfindlichen Gruppe bzw. in ein entsprechendes Vorprodukt mit einer alkaliempfindlichen Gruppe einführen, so geht man bevorzugt von einer Ausgangsverbindung aus, in welcher der Rest Y die $\beta$-Hydroxyethyl-Gruppe ist.

Die Überführung der $\beta$-Hydroxyethylsulfonyl-Verbindung in eine Verbindung mit Y gleich einer in $\beta$-Stellung durch einen alkalisch eliminierbaren Substituenten substituierten Ethylgruppe erfolgt analog bekannten Verfahrensweisen solcher Umsetzungen, die in der Literatur zahlreich für Farbstoffe mit dem faserreaktiven Rest des Vinylsulfontyps beschrieben sind. In der Regel wird zunächst die $\beta$-Hydroxyethylsulfonyl-Gruppe verestert, so beispielsweise in die Estergruppe der Phosphorsäure, einer niederen Alkancarbonsäure, einer aromatischen Sulfonsäure oder bevorzugt der Schwefelsäure übergeführt. Diese Veresterungsreaktion erfolgt mit den üblichen Veresterungs- und Acylierungsmitteln für solche Säuren, wie beispielsweise Acetanhydrid, Polyphosphorsäure, Phosphorpentachlorid und insbesondere 96-100 %ige Schwefelsäure oder Schwefeltrioxyd enthaltende Schwefelsäure, wie Oleum mit einem Schwefeltrioxydgehalt von bis zu 35 %, oder Chlorsulfonsäure zur Einführung der Sulfatogruppe. Die Umsetzung mit Schwefelsäure oder Schwefeltrioxyd enthaltender Schwefelsäure erfolgt bei einer Temperatur zwischen 0 °C und 25 °C. Die Umsetzung mit Chlorsulfonsäure kann auch in einem polaren organischen Lösemittel, wie beispielsweise N-Methylpyrrolidon, bei 10 bis 80 °C erfolgen.

Die erfindungsgemäßen Farbstoffe der allgemeinen Formel (1) können in üblicher und bekannter Verfahrensweise in erfindungsgemäße Farbstoffe der allgemeinen Formel (1) mit einem anderen alkalisch eliminierbaren Substituenten in der Gruppe Y übergeführt werden. Solche Verfahrensweisen sind in der Literatur, faserreaktive Farbstoffe mit dem faserreaktiven Rest der Vinylsulfonreihe betreffend, zahlreich beschrieben. So können erfindungsgemäße Farbstoffe mit dem $\beta$-Sulfatoethylsulfonyl-Rest durch Behandlung mit einem Alkali, wie in wäßriger Natronlauge bei einer Temperatur von 0 bis 40 °C während einiger Minuten, in erfindungsgemäße Farbstoffe mit der Vinylsulfonylgruppe überführt werden. Erfindungsgemäße Farbstoffe mit dem $\beta$-Thiosulfatoethylsulfonyl-Rest lassen sich beispielsweise aus Farbstoffen mit der Vinylsulfonylgruppe durch Umsetzung mit Natriumthiosulfat gewinnen.

Geht man bei der erfindungsgemäßen Synthese der Azofarbstoffe von Diazo-und Kupplungskomponenten aus, erfolgen die Umsetzungen in der üblichen Verfahrensweise der Diazotierungs- und Kupplungsreaktionen, so die Diazotierung in der Regel bei einer Temperatur zwischen -5 °C und + 15 °C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25 °C, ebenso bevorzugt in wäßrigem Medium.

Bei der erfindungsgemäßen Synthese von Schwermetallkomplex-Azofarbstoffen, beispielsweise solchen entsprechend der allgemeinen Formel (4j), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält, wobei die schwermetallfreien Ausgangs-Azoverbindungen zudem einen Acylaminorest enthalten können, wie einen Acetylaminorest. Beispielsweise kann man bei der Synthese der Kupferkomplex-Azofarbstoffe der Formel (4j) von einer Ausgangsverbindung entsprechend der allgemeinen Formel (25)

$$\begin{array}{ccc} R^k & & HO \\ | & & | \\ D_1 - N & = & N - K^1 -(N{=}N\text{-}K)_v \text{-acylamino} \end{array} \qquad (25)$$

ausgehen, in welcher $D_1$, K, $K^1$ und v eine der obengenannten Bedeutungen haben und $R^k$ ein Wasserstoffatom oder eine in ortho-Stellung zur Azogruppe an $D_1$ gebundene Hydroxy- oder Methoxygruppe ist, und diese acylaminogruppenhaltige Ausgangs-Azoverbindung analog bekannten und üblichen Verfahrensweisen mit einem kupferabgebenden Mittel, wie einem Kupfersalz, umsetzen. Ist $R^k$ ein Wasserstoffatom oder eine Methoxygruppe, so kann man die Verbindung (25) einer auf üblichen Wege durchzuführenden oxidativen oder entalkylierenden Kupferungsreaktion unterwerfen. Die nun erhaltene Kupferkomplex-Azoverbindung mit der Acylaminogruppe kann sodann analog bekannten Verfahrensweisen nach oder unter Hydrolyse der Acylaminogruppe zur Aminogruppe mit einem Cyanurhalogenid bzw. einer Verbindung der Formel (23) zu dem erfindungsgemäßen Farbstoff der allgemeinen Formel (1) umgesetzt werden.

Ausgangsverbindungen mit einer faserreaktiven Gruppe $-SO_2-Y$ , die als Diazokomponenten dienen können, sind beispielsweise:
2-(β-Sulfatoethylsulfonyl)-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5- oder -4-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 5-(β-Sulfatoethylsulfonyl)-2-amino-naphthalin, 6- oder 7- oder 8-(β-Sulfatoethylsulfonyl-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin, 3- oder 4-{β-[4-(β'-Sulfatoethylsulfonyl)-phen]-ethylamino}-anilin, 3- oder 4-{β-[2-Sulfo-4(β'-sulfatoethylsulfonyl)-phen]-ethylamino}-anilin, 3- oder 4-[β-(β'-Chlorethylsulfonyl)-ethylamino]-anilin, 3- oder 4-[β-(β'-Sulfatoethylsulfonyl)-ethylamino]-anilin, 3- oder 4-[β-(Vinylsulfonyl)-ethylamino]-anilin, 3- oder 4-[γ-(β'-Chlorethylsulfonyl)-propylamino]-anilin, 3- oder 4-[γ-(β'-Sulfatoethylsulfonyl)-propylamino]-anilin, 3- oder 4-[γ-(Vinylsulfonyl)-propylamino]anilin, 3,4-Di-(β-sulfatoethylsulfonyl)-anilin, 2,5-Di-(β-sulfatoethylsulfonyl)-anilin, 4-[γ-(β'-Sulfatoethylsulfonyl)-propoxy]-anilin, 2,5-Bis-[(β-sulfatoethylsulfonyl)-methyl]-anilin, 3- oder 4-{N-[γ-(β'-Sulfatoethylsulfonyl)-propyl-amidocarbonyl]}-anilin, 3,5-Bis-{N-[γ-(β'-sulfatoethylsulfonyl)-propyl-amidocarbonyl]}-anilin, 3-Sulfo-4-{[N-γ-(β'-sulfatoethylsulfonyl)-propyl-amidocarbonyl]-methoxy}-anilin und 4-{[N-γ-(β'-Sulfatoethylsulfonyl)-propyl-amidocarbonyl]-methoxy}-anilin.

Ausgangsverbindungen entsprechend der allgemeinen Formel $H_2N-D-NH_2$ bzw. $H_2N-D_2-NH_2$ sind beispielsweise 1,4-Phenylen-diamin, 1,4-Phenylendiamin-2-sulfonsäure, 1,4-Phenylendiamin-2-carbonsäure-1,4-Diamino-naphthalin-2-sulfonsäure, 2,6-Diamino-naphthalin-8-sulfonsäure, 2,6-Diamino-naphthalin-4,8-disulfonsäure, 1,3-Phenylen-diamin, 1,3-Phenylendiamin-4-sulfonsäure, 1,3-Phenylen-diamin-4,6-disulfonsäure, 1,4-Phenylendiamin-2,6-disulfonsäure, 1,4-Phenylendiamin-2,5-disulfonsäure, 1,4-Diamino-naphthalin-6-sulfonsäure, 4,4'-Diamino-diphenyl-3-sulfonsäure und 4,4'-Diamino-stilben-2,2'-disulfonsäure.

Ausgangsverbindungen entsprechend der allgemeinen Formel $H-E-NH_2$ , die zur Synthese der erfindungsgemäßen Disazofarbstoffen eingesetzt werden können und als Kupplungskomponente und anschließend an die Kupplung als Diazokomponente dienen, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Aminonaphthalin-6-sulfonsäure, 1-Aminonaphthalin-7-sulfonsäure, 2-Sulfo-5-acetylamino-anilin, 2-Amino-5-naphthol-7-sulfonsäure, 2-Amino-8-naphthol-6-sulfonsäure, 2-(4'-Amino-benzoylamino)-5-naphthol-7-sulfonsäure, 1-(4'-Amino-2-sulfo-phenyl)-3-methyl- oder -3-carboxy-5-pyrazolon und N-(Acetoacetyl)-3-sulfo-4-amino-anilid.

Ausgangsverbindungen, die als Kupplungskomponenten zur Snythese der erfindungsgemäßen Azofarbstoffe dienen können und die Gruppe $-SO_2$-Y enthalten, sind beispielsweise 1-[4'-(β-Sulfatoethyl-sulfonyl)-phenyl]-3-methyl-5-pyrazolon, 1-[4'-(Vinyl-sulfonyl)phenyl]-3-methyl-5-pyrazolon, 1-[4'-(β-Sulfatoethylsulfonyl)-phenyl]-3-carboxy-5-pyrazolon, 1-[3'-[β-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]-6-sulfo-8-naphthol, 3-[3'-(β-Chlorethylsulfonyl)-benzoylamino]-6-sulfo-8-naphthol, 3-[3'-(Vinylsulfonyl)-benzoyl-amino]-6-sulfo-8-naphthol, 6-Sulfo-1-[3'-(β-chlorethylsulfonyl)-benzoylamino]-naphthol, 7-Sulfo-[3'-(vinylsulfonyl)-benzoylamino]-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonyl-phenyl)-ureido]-3,6-disulfo-8-naphthol, 1-[N'-(3'-Vinylsulfonyl-propyl)-ureido]-3,6-disulfo-8-naphthol, 1-[N'-(3'-β-Chlor-ethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(3'-β-Chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-Chlorethylsulfonyl-propyl)-ureido]-6-sulfo-8-naphthol, 3-[N'-(3'-β-Chlorethylsulfonyl-phenyl)-ureido]-6-sulfo-8-naphthol, 3-[N'-(3'-Vinylsulfonyl-propyl)-ureido]-6-sulfo-8-naphthol, 2-Sulfo-5-[N'-(3''-β-chlorethylsulfonyl)-phenyl]-ureido-anilin, 3-[N'-(3''-β-Sulfatoethylsulfonyl)-phenyl]-ureido-anilin und 6-Sulfo-1-[N'-(3''-β-Sulfatoethylsulfonyl)-phenyl]-ureido-8-naphthol.

Kupplungskomponenten entsprechend der allgemeinen Formel H-K-N($R^x$)H , die zum Aufbau der erfindungsgemäßen Azofarbstoffe, in welchen der faserreaktive Rest Z in der Kupplungskomponente enthalten ist, dienen können und die zunächst in die aminogruppenhaltigen Azofarbstoffe entsprechend der allgemeinen Formel (20) übergeführt werden, in deren Aminogruppe -N($R^x$)H der faserreaktive Rest $Z^1$ oder ein anderer vorgenannter Halogentriazinrest anschließend eingeführt werden kann bzw. wird, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-(Hydroxyacetylamino)-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6-sulfonsäure, 1-Amino-naphthalin-7-sulfonsäure, 4-Sulfo-1,3-diamino-benzol, 6-Sulfo-2-methoxy-1-amino-naphthalin, 5,7-Disulfo-2-aminonaphthalin, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 1-Amino-8-naphthol-3,6-disulfonsäure, 1-Amino-8-hydroxy-4,6-disulfonsäure, 1-Amino-8-hydroxy-naphthalin-2,4,6-trisulfonsäure, 2-(Methylamino)- und 2-(Ethylamino)-5-hydroxynaphthalin-7-sulfonsäure, 2-Amino-5-hydroxynaphthalin-1,7-disulfonsäure, 2-(Methylamino)- und 2-(Ethylamino)-8-hydroxynaphthalin-6-sulfonsäure, 2-Amino-8-hydroxynaphthalin-3,6-disulfonsäure, 2-(4'-Amino-3'-sulfophenylamino)-5-hydroxynaphthalin-7-sulfonsäure, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-(β-Aminoethyl)-3-cyano-4-methyl-6-hydroxy-pyrid-2-on, 1-(γ-Aminopropyl)-3-sulfomethyl-4-methyl-6-hydroxy-pyrid-2-on, 1,3-Diaminobenzol, 3-[N,N-Di-(β-hydroxyethyl)]-amino-anilin, 3-[N,N-Di-(β-sulfatoethyl)]-amino-4-methoxy-anilin, 3-(Sulfo-benzylamino)-anilin, 3-(Sulfobenzoylamino)-4-chlor-anilin und 3-[N,N-Di-(sulfobenzyl)]-amino-anilin, 2-Sulfo-5-acetylamino-anilin, 2-Amino-5-naphthol-7-sulfonsäure, 2-Amino-8-naphthol-6-sulfonsäure, 1-(4'-Aminobenzoyl)-amino-8-hydroxynaphthalin-3,6-disulfonsäure, 1-(4'-Aminobenzoyl)-amino-8-hydroxynaphthalin-4,6-disulfonsäure, 1-(3'-Aminobenzoyl)-amino-8-hydroxynaphthalin-3,6-disulfonsäure, 1-(3'-Aminobenzoyl)-amino-8-hydroxynaphthalin-4,6-disulfonsäure, 1-(2'-Aminobenzoyl)-amino-8-hydroxy-naphthalin-3,6-disulfonsäure, 1-(2'-Aminobenzoyl)-amino-8-hydroxynaphthalin-4,6-disulfonsäure, 2-(3'-Aminobenzoyl)-amino-5-hydroxy-naphthalin-7-sulfonsäure, 2-(2'-Aminobenzoyl)-amino-5-hydroxy-naphthalin-7-sulfonsäure, 2-(4'-Aminobenzoyl)-amino-8-hydroxynaphthalin-6-sulfonsäure, 2-(3'-Aminobenzoyl)-amino-8-hydroxynaphthalin-6-sulfonsäure, 2-(2'-Aminobenzoyl)-amino-8-hydroxynaphthalin-6-sulfonsäure, 2-(4'-Aminobenzoyl)-amino-5-naphthol-7-sulfonsäure, 1-(4'-Amino- oder 1-(4'-Acetylamino-2-sulfophenyl)-3-methyl- oder -3-carboxy-5-pyrazolon, N-(3-Sulfo-4-amino)-acetoacetyl-anilid, 1-Amino-8-naphthol-3,6-oder -4,6-disulfonsäure, 1-Acetylamino-8-naphthol-3,6- oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methyl-amino)-8-naphthol-6-sulfonsäure, 1-(3'-Amino- oder 1-(3'-Acetylamino-6'-sulfophenyl)-3-methyl- oder -3-carboxy-5-pyrazolon, 2-(N-Methyl-N-acetylamino)- oder 2-Methylamino-5-naphthol-7-sulfonsäure, N-Methyl-anilin und N-Propyl-m-toluidin.

Geht man von Diazokomponenten der Formel $H_2N$-D-$NH_2$ bzw. $H_2N$-$D_2$-$NH_2$ aus, so können diese auch in der Form der Monoacylamino-amino-Verbindungen eingesetzt werden, wobei der Acylrest insbesondere der Acetylrest ist. Diese Monoacylamino-amino-Verbindungen werden zunächst diazotiert und mit einer kuppelfähigen Verbindung gekuppelt; anschließend wird der Acylrest hydrolytisch abgespalten, und die so nunmehr wieder frei gewordene Aminogruppe kann mit dem faserreaktiven Rest $Z^1$ verbunden werden. Solche monoacylierten Diamine sind beispielsweise 2-Sulfo-5-acetylamino-anilin und 2-Sulfo-4-acetylamino-anilin. In gleicher Weise können aminogruppenhaltige Kupplungskomponenten in Form des Acylamino-Derivates in die Kupplungsreaktion eingesetzt werden, wobei anschließend auch hier der Acylrest hydrolytisch abgespalten werden kann, um die freiwerdende Aminogruppe mit der faserreaktiven Gruppe $Z^1$ zu verbinden.

Bivalente Kupplungskomponenten, die zum Aufbau erfindungsgemäßer Disazofarbstoffe dienen können, in welchen der bivalente Kupplungsrest mit zwei Diazokomponenten verbunden ist, von denen die eine oder beide einen faserreaktiven Rest Z enthalten, beispielsweise von Farbstoffen der allgemeinen Formeln (4d) (4e) oder (4g), sind beispielsweise Resorcin, 1,3-Diaminobenzol, 5,5'-Dihydroxy-7,7'-disulfo-2,2'-dinaphthylharnstoff, 1,8-Dihydroxy-3,6-disulfo-naphthalin und insbesondere 1-Amino-8-naphthol-3,6-disulfonsäure und 1-Amino-8-naphthol-4,6-disulfonsäure.

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz von eines dispergierend wirkenden und die Diffusion der nicht fixierten Anteile fördernden Mittels, gründlich gespült. Diese Färbe- und Druckverfahren sind zahlreich in der allgemeinen Fachliteratur wie auch in der Patentliteratur beschrieben.

Gegenstand der vorliegenden Erfindung ist deshalb auch die Verwendung der erfindungsgemäßen Farbstoffe der allgemeinen Formel (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff der allgemeinen Formel (1) als Farbmittel eingesetzt wird, indem man den Farbstoff der allgemeinen Formel (1) im wäßrigen Medium auf das Material appliziert und ihn mittels Wärme oder mittels einer alkalisch wirkenden Verbindung oder mittels beidem auf dem Material fixiert.

Falls erfindungsgemäße Anthrachinonfarbstoffe eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen, z.B. einem Naphthalinsulfonsäure-Formaldehyd-Kondensat oder insbesondere Anthrachinon-2-sulfonsäure, behoben werden.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten. Sie sind weiterhin sehr gut für den Einsatz in die Ätzdruck- und Reservedruckverfahren geeignet.

Die mit den erfindungsgemäßen Farbstoffen hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel A

Eine Suspension von 184 Teilen Cyanurchlorid in 2000 Teilen Eiswasser versetzt man mit 146 Teilen Acetessigsäureethylester und führt die Umsetzung bei 0 °C bis 5 °C unter Einhaltung eines pH-Wertes von 8 bis 9 durch Zugabe von wäßriger 2N-Natronlauge durch. Anschließend klärt man die Syntheselösung. Es wird eine hellgelbe Lösung der Verbindung der Formel

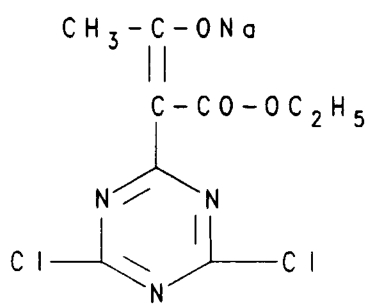

erhalten, die zersetzlich ist und direkt in die nachfolgenden Syntheseschritte zur Herstellung eines erfindungsgemäßen Farbstoffes eingesetzt werden kann.
$^{1}$H-NMR-Analyse (gemessen in einem Gemisch aus $D_2O$ und $H_2O$ mit Tetramethylsilan als innerem Standard):
1,19 ppm (3H;t), 2,2 ppm (3H;s), 4,18 ppm (2H;q).
$^{13}$C-NMR-Analyse:
12,9 ppm, 27,9 ppm, 61,7 ppm, 104,9 ppm,
166,7 ppm, 169,1 ppm, 172,6 ppm, 195,1 ppm.

In analoger Weise können die Methylester- und Isopropylester-Derivate hergestellt werden, indem man analog, wie oben beschrieben, Cyanurchlorid mit der äquivalenten Menge an Acetessigsäuremethylester bzw. Acetessigsäureisopropylester umsetzt.

Beispiel B

Eine Suspension von 55 Teilen Cyanurchlorid in 600 Teilen Wasser werden bei 0 °C mit 30,6 Teilen Acetylaceton versetzt. Die Umsetzung erfolgt bei einem pH-Wert zwischen 8 und 8,5, der mittels einer wäßrigen 2N-Natronlauge gehalten wird. Die Syntheselösung wird anschließend geklärt. Es wird eine hellgelbe Lösung der Verbindung der Formel

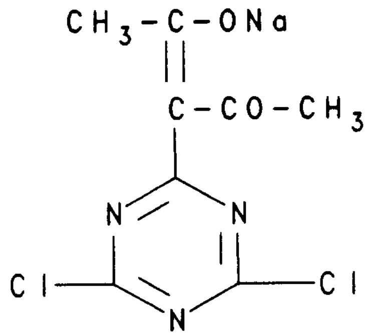

erhalten, die direkt in die weiteren Syntheseschritte zur Herstellung eines erfindungsgemäßen Farbstoffes eingesetzt werden kann.
$^{1}$H-NMR-Analyse: 2,32 ppm (s)
$^{13}$C-NMR-Analyse: 32,0 ppm, 33,3 ppm, 60,0 ppm
117,2 ppm, 170,5 ppm, 204,5 ppm, 211,4 ppm.

Beispiel C

Man löst zunächst 33,3 Teile Malonsäuredinitril in 150 Teilen Wasser bei 40 °C, kühlt auf 20 °C ab und versetzt die Lösung mit 50 Teilen Eis. Man erhält auf diese Weise eine feine Suspension des Malonsäuredinitrils, die sodann zu einer Suspension von 93 Teilen Cyanurchlorid in 500 Teilen Eiswasser gegeben wird. Die Umsetzung erfolgt unter Einhaltung eines pH-Wertes zwischen 7 und 7,5 mittels einer wäßrigen 2N-Natronlauge während etwa einer Stunde.

Die als fein kristalline Substanz ausgefallene Verbindung der Formel

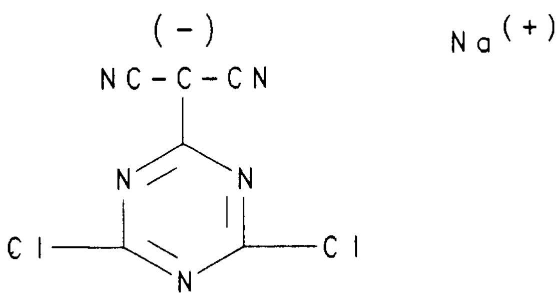

kann durch Filtration isoliert werden.
$^{13}$C-NMR-Analyse:
47,0 ppm, 118,7 ppm, 167,5 ppm, 174,9 ppm.

Beispiel 1

Man versetzt die gemäß Beispiel A erhaltene klare Lösung mit einer wäßrigen Lösung mit einem pH-Wert von 5 von 218 Teilen 3-(β-Sulfatoethylsulfonyl)-anilin in 1000 Teilen Wasser und führt die Umsetzung unter Einhaltung eines pH-Wertes von 5,5 bei 20 °C durch.
Es wird eine klare Lösung der Verbindung der Formel

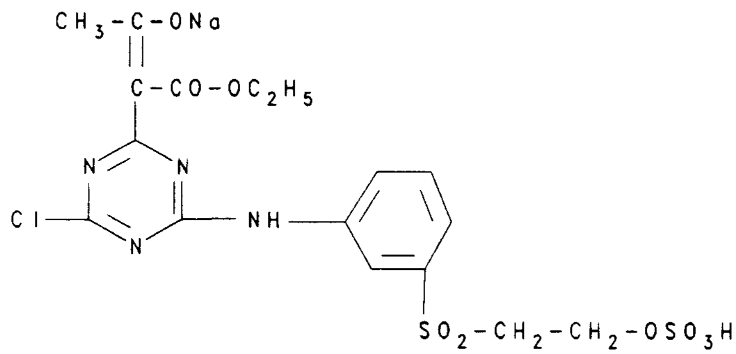

erhalten, die mit 371 Teilen der Azoverbindung 7-(2'-Sulfo-4'-methoxy-phenyl)-azo-8-hydroxy-6-sulfo-3-amino-naphthalin bei einem pH-Wert von 4 bis 5 und einer Temperatur von etwa 35 °C umgesetzt wird.

Der erhaltene erfindungsgemäße Azofarbstoff wird durch Aussalzen mit Natriumchlorid isoliert. Er besitzt, in Form der freien Säure geschrieben, die Formel

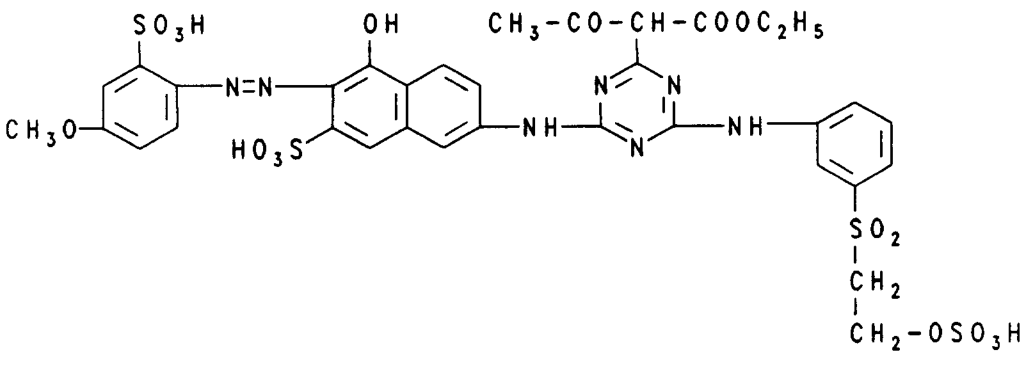

($\lambda_{max}$ = 499 nm)

und zeigt sehr gute faserreaktive Farbstoffeigenschaften. Er färbt nach den in der Technik üblichen Applikations- und Fixierverfahren für faserreaktive Farbstoffe beispielsweise Cellulosefasermaterialien, wie Baumwolle, in scharlachroten, echten Tönen.

Beispiel 2

Zur Herstellung eines erfindungsgemäßen Azofarbstoffes verfährt man gemäß der Verfahrensweise des Beispieles 1, erhitzt jedoch nach der Umsetzung der Amino-Azoverbindung mit der Chlortriazinverbindung die erhaltene Farbstofflösung zur Spaltung der $\beta$-Dicarbonylgruppe im Triazinrest bei 70 °C und einem pH-Wert von 5 während zwei Stunden.

Der erhaltene erfindungsgemäße Azofarbstoff wird durch Aussalzen mit Natriumchlorid isoliert. Er besitzt, in Form der freien Säure geschrieben, die Formel

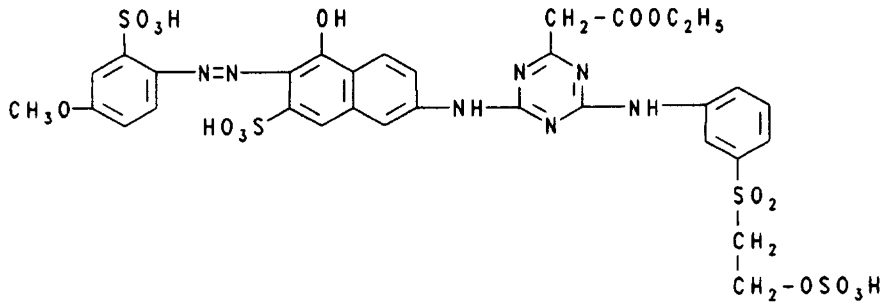

($\lambda_{max}$ = 499 nm)

und zeigt sehr gute faserreaktive Farbstoffeigenschaften. Er färbt nach den in der Technik üblichen Applikations- und Fixierverfahren für faserreaktive Farbstoffe beispielsweise Cellulosefasermaterialien, wie Baumwolle, in scharlachroten, echten Tönen.

Beispiel 3

Man verfährt zur Herstellung der Monochlortriazinverbindung gemäß den Angaben des Beispieles 1, setzt jedoch anstelle des 3-($\beta$-Sulfatoethylsulfonyl)-anilins die äquivalente Menge an 4-($\beta$-Sulfatoethylsulfonyl)-anilin ein und gibt zu der erhaltenen Lösung der Monochlortriazinverbindung 204 Teile 1-Amino-3,6-disulfo-8-naphthol und führt die Umsetzung während drei Stunden bei 30°C und einem pH-Wert von 3 durch. Zu dieser Lösung der erhaltenen Kupplungskomponente gibt man bei 0 bis 5°C eine auf üblichem Wege hergestellte salzsaure Suspension des Diazoniumsalzes aus 180 Teilen 1,5-Disulfo-2-naphthylamin. Man führt die Kupplungsreaktion bei einem pH-Wert zwischen 5 und 5,5 und einer Temperatur von etwa 10°C durch und isoliert den erhaltenen erfindungsgemäßen Azofarbstoff in üblicher Weise.

Er besitzt, in Form der freien Säure geschrieben, die Formel

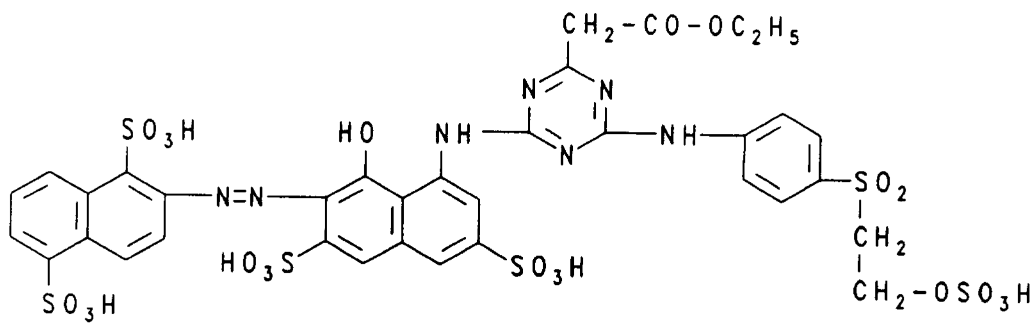

($\lambda_{max}$ = 540 nm)

zeigt sehr gute faserreaktive Farbstoffeigenschaften und liefert nach den in der Technik für faserreaktive Farbstoffe üblichen Applikations- und Fixierverfahren farbstarke, blaustichig rote Färbungen und Drucke mit guten Echtheitseigenschaften.

Beispiel 4

Man versetzt die gemäß Beispiel A erhaltene klare Lösung mit einer wäßrigen Lösung mit einem pH-Wert von 5 von 218 Teilen 4-($\beta$-Sulfatoethylsulfonyl)-anilin in 1000 Teilen Wasser, stellt einen pH-Wert von 3,5 ein und führt die Umsetzung unter Einhaltung dieses pH-Wertes während zwei Stunden bei 20°C durch. Es wird eine klare Lösung der Verbindung der Formel

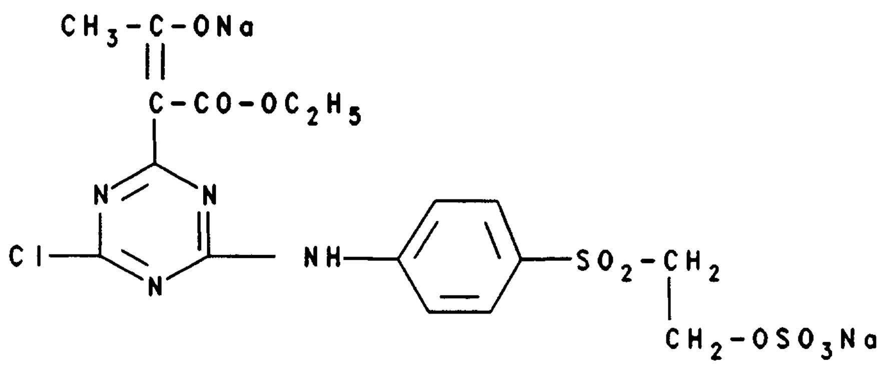

erhalten, die mit 370 Teilen der Azoverbindung 3-Amino-7-(1',5'-disulfo-naphth-2'-yl)-azo-6-sulfo-8-naphthol versetzt wird; die Umsetzung erfolgt während zwei Stunden bei 40 bis 45 °C und einem pH-Wert von 4,5, wobei zusätzlich eine Spaltung des β-Dicarbonylrestes erfolgt.

Der erhaltene erfindungsgemäße Azofarbstoff wird durch Aussalzen mit Natriumchlorid isoliert. Er besitzt, in Form der freien Säure geschrieben die Formel

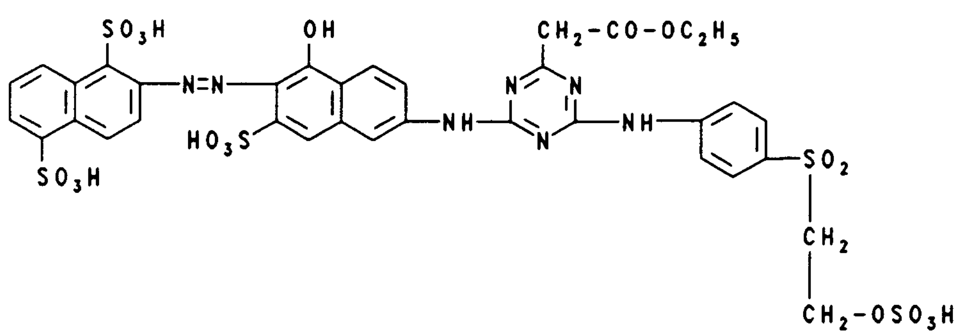

($\lambda_{max}$ = 483 nm)

zeigt sehr gute faserreaktive Farbstoffeigenschaften und färbt die in der Beschreibung genannten Materialien, insbesondere Cellulosefasermaterialien, wie Baumwolle, in farbstarken, echten orangen Tönen.

Beispiele 5 bis 61

In den nachfolgenden Tabellenbeispielen sind weitere erfindungsgemäße Azofarbstoffe mit Hilfe der Komponenten entsprechend der allgemeinen Formel (A)

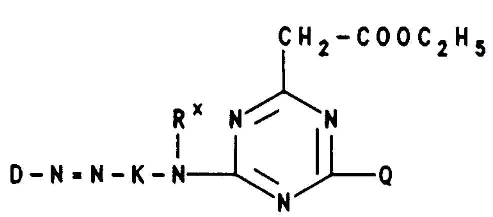

(A)

beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (A) ersichtlichen Komponenten (wie der Diazokomponente $D-NH_2$, der Kupplungskomponente $H-K-NR^xH$, einem Halogentriazin, Acetessigsäureethylester und einem Amin der Formel H-Q) herstellen. Sie besitzen sehr gute faserreaktive Farbstoffeigenschaften und färben die in der Beschreibung

genannten Materialien, insbesondere Cellulosefasermaterialien, wie Baumwolle, in den in dem jeweiligen Tabellenbeispiel (hierfür Baumwolle) angegebenen Tönen in hoher Farbstärke und mit guten Echtheiten.

| Bsp. | Rest D- | Rest -K-N($R^x$)- | Rest -Q | Farbton |
|---|---|---|---|---|
| 5 | 3,6,8-Trisulfo-naphth-2-yl | 3-Ureido-phenylen(4,1)-1-amino | 4-(ß-Sulfato-ethylsulfonyl)-phenylamino | rotstichig gelb (416) |
| 6 | dito | dito | 3-(ß-Sulfato-ethylsulfonyl)-propylamino | rotstichig gelb (416) |
| 7 | dito | dito | 3-(Vinylsulfonyl)-phenylamino | rotstichig gelb (417) |
| 8 | 4,8-Disulfo-naphth-2-yl | 3-Acetylamino-phenylen(4,1)-1-amino | 3-(ß-Sulfato-ethylsulfonyl)-phenylamino | rotstichig gelb (390) |
| 9 | dito | dito | 4-(ß-Sulfato-ethylsulfonyl)-phenylamino | rotstichig gelb (391) |
| 10 | dito | dito | 4-(ß-Sulfato-ethylsulfonyl)-phenethylamino | rotstichig gelb (392) |
| 11 | dito | dito | 3-(ß-Sulfato-ethylsulfonyl)-propylamino | rotstichig gelb (390) |

| Bsp. | Rest D- | Rest -K-N($R^x$)- | Rest -Q | Farbton |
|---|---|---|---|---|
| 12 | dito | dito | 2,5-Dimethoxy-4-(ß-sulfatoethyl-sulfonyl)-phenylamino | rotstichig gelb (391) |
| 13 | dito | dito | 2-Methoxy-5-(ß-sulfatoethyl-sulfonyl)-phenylamino | rotstichig gelb (394) |
| 14 | 4,6,8-Trisulfo-naphth-2-yl | 3-Methyl-phenylen(4,1)-1-amino | 3-(Vinylsulfonyl)-phenylamino | rotstichig gelb (406) |
| 15 | dito | dito | 4-(ß-Sulfato-ethylsulfonyl)-phenylamino | rotstichig gelb (407) |
| 16 | 1,5-Disulfo-naphth-2-yl | 8-Hydroxy-6-sulfo-naphthylen(7,3)-3-amino | 3-(ß-Sulfato-ethylsulfonyl)-phenylamino | orange (483) |
| 17 | dito | dito | 3-(ß-Sulfato-ethylsulfonyl)-propylamino | orange (482) |
| 18 | dito | dito | 4-(ß-Sulfato-ethylsulfonyl)-phenethylamino | orange (482) |
| 19 | dito | 8-Hydroxy-6-sulfo-naphthylen(7,3)-3-(N-methyl-amino) | 4-(ß-Sulfato-ethylsulfonyl)-phenylamino | orange (485) |

| Bsp. | Rest D- | Rest -K-N($R^x$)- | Rest -Q | Farbton |
|---|---|---|---|---|
| 20 | 6-(ß-Sulfato-ethylsulfonyl)-1-sulfo-naphth-2-yl | 8-Hydroxy-6-sulfo-naphthylen(7,3)-3-amino | dito | orange (484) |
| 21 | dito | dito | 3-(ß-Sulfato-ethylsulfonyl)-phenylamino | orange (484) |
| 22 | 4-Methoxy-2-sulfo-phenyl | dito | 4-(ß-Sulfato-ethylsulfonyl)-phenethylamino | scharlach (499) |
| 23 | dito | dito | 4-(ß-Sulfato-ethylsulfonyl)-phenylamino | scharlach (500) |
| 24 | dito | dito | N-Ethyl-4-(ß-sulfatoethyl-sulfonyl)-phenylamino | scharlach (499) |
| 25 | dito | dito | 3,4-Di-(ß-Sulfato-ethylsulfonyl)-phenylamino | scharlach (498) |
| 26 | dito | dito | 2-Methoxy-5-(ß-sulfatoethyl-sulfonyl)-phenylamino | scharlach (500) |
| 27 | dito | dito | 6-(ß-Sulfato-ethylsulfonyl)-naphth-2-yl-amino | scharlach (501) |

| Bsp. | Rest D- | Rest -K-N($R^x$)- | Rest -Q | Farbton |
|---|---|---|---|---|
| 28 | 2-Sulfo-phenylamino | 8-Hydroxy-4,6-disulfo-naphthylen(7,1)-1-amino | 3-(ß-Sulfato-ethylsulfonyl)-phenylamino | gelbstichig rot (531) |
| 29 | dito | dito | 4-(ß-Sulfato-ethylsulfonyl)-phenylamino | gelbstichig rot (532) |
| 30 | 2,5-Dicarboxy-phenyl | dito | dito | gelbstichig rot |
| 31 | dito | dito | 3-(ß-Sulfato-ethylsulfonyl)-phenylamino | dito |
| 32 | dito | 8-Hydroxy-3,6-disulfo-naphthylen(7,1)-1-amino | dito | rot |
| 33 | dito | dito | 4-(ß-Sulfato-ethylsulfonyl)-phenylamino | rot |
| 34 | dito | dito | 3-(ß-Sulfato-ethylsulfonyl)-propylamino | rot |
| 35 | dito | dito | 4-(ß-Sulfato-ethylsulfonyl)-phenethylamino | rot |

| Bsp. | Rest D- | Rest -K-N($R^x$)- | Rest -Q | Farbton |
|---|---|---|---|---|
| 36 | 1,5-Disulfo-naphth-2-yl | dito | dito | blaustichig rot (540) |
| 37 | dito | dito | 4-(ß-Sulfato-ethylsulfonyl)-phenylamino | blaustichig rot (539) |
| 38 | dito | dito | 3-(ß-Sulfato-ethylsulfonyl)-phenylamino | blaustichig rot (541) |
| 39 | dito | dito | N-Ethyl-4-(ß-sulfatoethyl-sulfonyl)-phenylamino | blaustichig rot (541) |
| 40 | 4-(ß-Sulfato-ethylsulfonyl)-phenyl | 8-Hydroxy-4,6-disulfo-naphthylen(7,1)-1-amino | 4-(ß-Sulfato-ethylsulfonyl)-phenylamino | rot (515) |
| 41 | dito | dito | 3-(ß-Sulfato-ethylsulfonyl)-phenylamino | rot (514) |
| 42 | 2,5-Disulfo-phenyl | 8-Hydroxy-6-sulfo-naphthylen(7,3)-3-amino | dito | orange (491) |
| 43 | dito | dito | 4-(ß-Sulfato-ethylsulfonyl)-phenylamino | orange (490) |

| Bsp. | Rest D- | Rest -K-N($R^x$)- | Rest -Q | Farbton |
|---|---|---|---|---|
| 44 | 1,5-Disulfo-naphth-2-yl | dito | dito | orange (483) |
| 45 | 4-(ß-Sulfato-ethylsulfonyl)-phenyl | 8-Hydroxy-3,6-disulfo-naphthylen(7,1)-1-amino | 3-(ß-Sulfato-ethylsulfonyl)-phenyl | rot (520) |
| 46 | dito | dito | 4-(ß-Sulfato-ethylsulfonyl)-phenylamino | rot (520) |
| 47 | dito | dito | γ-(ß'-Sulfato-ethylsulfonyl)-propylamino | rot (521) |
| 48 | dito | dito | 4-(ß-Sulfato-ethylsulfonyl)-phenethylamino | rot (518) |
| 49 | dito | dito | 2-Methoxy-5-(ß-sulfatoethyl-sulfonyl)-phenylamino | rot (522) |
| 50 | 3-(ß-Sulfato-ethylsulfonyl)-phenyl | dito | 4-(ß-Sulfato-ethylsulfonyl)-phenylamino | rot (522) |
| 51 | 4-(ß-Sulfato-ethylsulfonyl)-2-sulfo-phenyl | dito | dito | gelbstichig rot (520) |

| Bsp. | Rest D- | Rest -K-N($R^x$)- | Rest -Q | Farbton |
|---|---|---|---|---|
| 52 | 6-(ß-Sulfato-ethylsulfonyl)-1-sulfo-naphth-2-yl | dito | dito | blaustichig rot (542) |
| 53 | 4-Sulfo-phenyl | 3-Amino-4-sulfo-phenylen(6,1)-1-amino | 3-(ß-Sulfato-ethylsulfonyl)-phenylamino | goldgelb (418) |
| 54 | dito | dito | 4-(ß-Sulfato-ethylsulfonyl)-phenylamino | goldgelb (418) |
| 55 | dito | dito | γ-(ß'-Sulfato-ethylsulfonyl)-propylamino | goldgelb (416) |
| 56 | dito | 3-Carboxy-pyrazol-5-on-4-yl-1-(2'-sulfo-phen-1',4'-ylen)-4'-amino | 4-(ß-Sulfato-ethylsulfonyl)-phenylamino | gelb (435) |
| 57 | dito | dito | 3-(ß-Sulfato-ethylsulfonyl)-phenylamino | gelb (434) |
| 58 | 4-(ß-Sulfato-ethylsulfonyl)-phenyl | dito | dito | gelb (427) |
| 59 | dito | dito | 4-(ß-Sulfato-ethylsulfonyl)-phenylamino | gelb (427) |

| Bsp. | Rest D- | Rest -K-N($R^x$)- | Rest -Q | Farbton |
|---|---|---|---|---|
| 60 | 2-Sulfo-phenyl | dito | dito | gelb (428) |
| 61 | dito | dito | 3-(ß-Sulfato-ethylsulfonyl)-phenylamino | gelb (429) |

Beispiel 62

Zur Herstellung eines erfindungsgemäßen Azofarbstoffes setzt man zunächst gemäß den Angaben des Beispieles A Cyanurchlorid mit Acetessigsäuremethylester um und anschließend die erhaltene Dichlortriazinverbindung gemäß den Angaben des Beispieles 1 mit 3-(β-Sulfatoethylsulfonyl)-anilin. Die so erhaltene Monochlortriazinverbindung wird sodann mit der äquivalenten Menge der Azoverbindung 1-(4'-Sulfophenyl)-3-carboxy-4-(5'-amino-2'-sulfo-phenyl)-azo-pyrazol-5-on bei einer Temperatur von etwa 35 °C und einem pH-Wert von 4 bis 5 umgesetzt. Anschließend erhitzt man die erhaltene Farbstofflösung auf 70 °C, um die β-Dicarbonyl-Spaltung durchzuführen.

Der erhaltene erfindungsgemäße Azofarbstoff, der, in Form der freien Säure geschrieben, die Formel

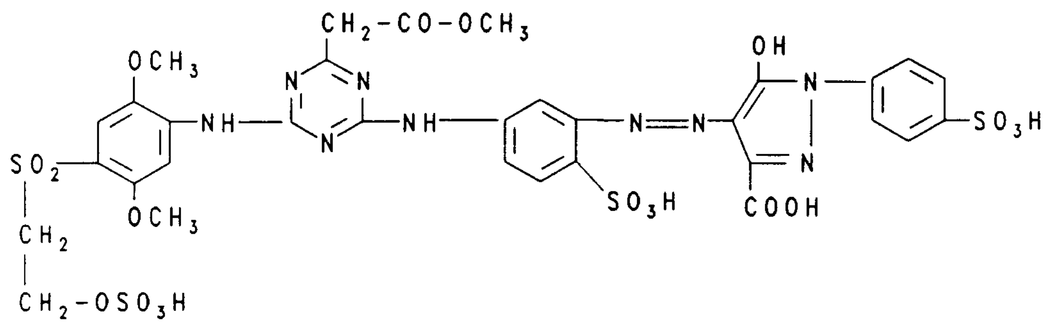

($\lambda_{max}$ = 412 nm)

besitzt, wird in üblicher Weise aus der Syntheselösung isoliert. Er weist sehr gute Farbstoffeigenschaften auf und färbt nach den in der Technik üblichen Färbeweisen für faserreaktive Farbstoffe beispielsweise Cellulosefasermaterialien in kräftigen, gelben Tönen.

Beispiel 63

Man setzt gemäß den Angaben des Beispiels A Cyanurchlorid mit Acetessigsäureisopropylester um und anschließend die erhaltene Dichlortriazinverbindung mit 4-(β-Sulfatoethylsulfonyl)-anilin analog den Angaben des Beispieles 4. Die erhaltene klare Lösung dieser Monochlortriazin-Ausgangsverbindung wird sodann mit der äquivalenten Menge der Amino-Disazoverbindung 7-(5'-Amino-2'-sulfo-phenyl)-azo-2-(4"-β-sulfatoethylsulfonyl-phenyl)-azo-3,6-disulfo-1-amino-8-hydroxy-naphthalin bei einer Temperatur von 60 bis 70 °C und einem pH-Wert von 5 umgesetzt. Nach Abkühlung der Syntheselösung auf 20 °C wird der erhaltene erfindungsgemäße Azofarbstoff in üblicher Weise isoliert. Er besitzt, in Form der freien Säure geschrieben, die Formel

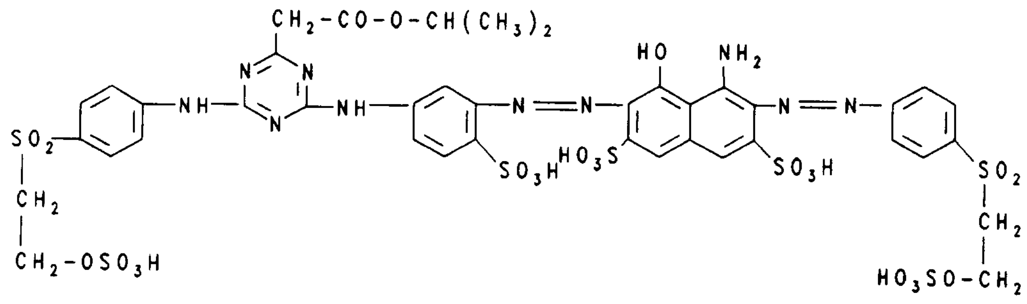

($\lambda_{max}$ = 595 nm)

und zeichnet sich durch sehr gute faserreaktive Farbstoffeigenschaften aus. Er färbt die in der Beschreibung genannten Materialien, wie insbesondere Cellulosefasermaterialien, in farbstarken marineblauen echten Tönen.

Beispiele 64 bis 75

In den nachfolgenden Tabellenbeispielen sind weitere erfindungsgemäße Azofarbstoffe mit Hilfe der Komponenten entsprechend der allgemeinen Formel (B)

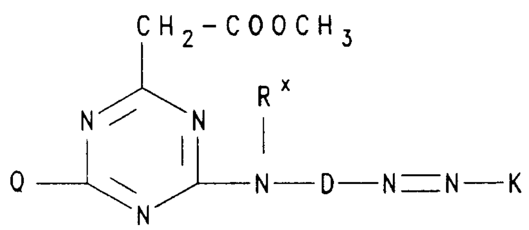

(B)

beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (B) ersichtlichen Komponenten (wie einem Diaminophenylen oder -naphthylen der Formel $HR^x$-N-D-$NH_2$, der Kupplungskomponente H-K, einem Halogentriazin, Acetessigsäuremethylester und einem Amin der Formel H-Q) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hier für Baumwolle) angegebenen Tönen in hoher Farbstärke und mit guten Echtheiten.

| Bsp. | Rest -Q | Rest -D | Rest -K | Farbton |
|---|---|---|---|---|
| 64 | 3-(ß-Sulfato-ethylsulfonyl)-phenylamino | 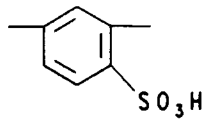 | 1-N-(ß-Sulfoethyl)-4-methyl-2-hydroxy-pyrid-6-on-3-yl | grünstichig gelb |
| 65 | 4-(ß-Sulfato-ethylsulfonyl)-phenylamino | dito | dito | dito |

| Bsp. | Rest -Q | Rest -D | Rest -K | Farbton |
|---|---|---|---|---|
| 66 | γ-(ß-Sulfato-ethylsulfonyl)-propylamino | dito | dito | dito |
| 67 | 3-(ß-Sulfato-ethylsulfonyl)-phenylamino | 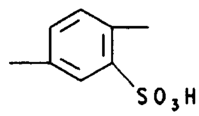 | dito | dito |
| 68 | dito | 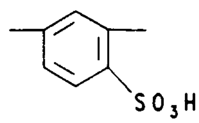 | 1-N-Ethyl-4-methyl-5-carbonamido-2-hydroxy-pyrid-6-on-3-yl | dito |
| 69 | 4-(ß-Sulfato-ethylsulfonyl)-phenylamino | dito | dito | dito |
| 70 | 4-(ß-Sulfato-ethylsulfonyl)-phenethyl-amino | dito | dito | dito |
| 71 | 4-(ß-Sulfato-ethylsulfonyl)-phenylamino | 4,6-Disulfo-1,3-phenylen | dito | dito |
| 72 | 3-(ß-Sulfato-ethylsulfonyl)-phenylamino . | dito | dito | dito |

| Bsp. | Rest -Q | Rest -D | Rest -K | Farbton |
|---|---|---|---|---|
| 73 | dito | dito | 1,4-Dimethyl-5-carbonamido-2-hydroxy-pyrid-6-on-3-yl | dito |
| 74 | dito | 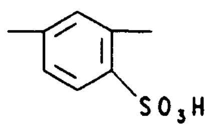 | 1,4-Dimethyl-5-sulfomethyl-2-hydroxy-pyrid-6-on-3-yl | dito |
| 75 | 4-(ß-Sulfato-ethylsulfonyl)-phenylamino | dito | dito | dito |

Beispiel 76

Man versetzt die gemäß Beispiel 1 erhaltene Lösung der Monochlortriazinverbindung [einem Umsetzungsprodukt aus Cyanurchlorid, Acetessigsäureethylester und 3-($\beta$-Sulfatoethylsulfonyl)-anilin] mit der äquivalenten Menge der aus der europäischen Patentanmeldungs-Veröffentlichung Nr. 0 382 111A bekannten Kupferformazanverbindung der Formel

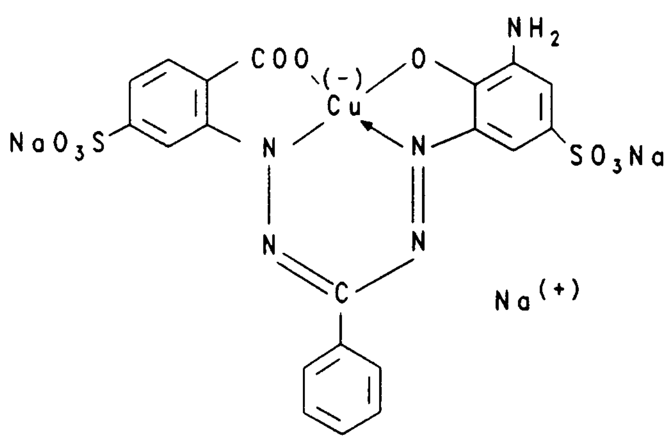

und führt die Umsetzung der Chlortriazinverbindung mit der Aminogruppe des Kupferformazans bei einer Temperatur von etwa 25 °C und bei einem pH-Wert von etwa 5 durch. Der erhaltene erfindungsgemäße Kupferformazanfarbstoff wird mittels Natriumchlorid als Natriumsalz ausgesalzen. Er besitzt, in Form der freien Säure geschrieben, die Formel

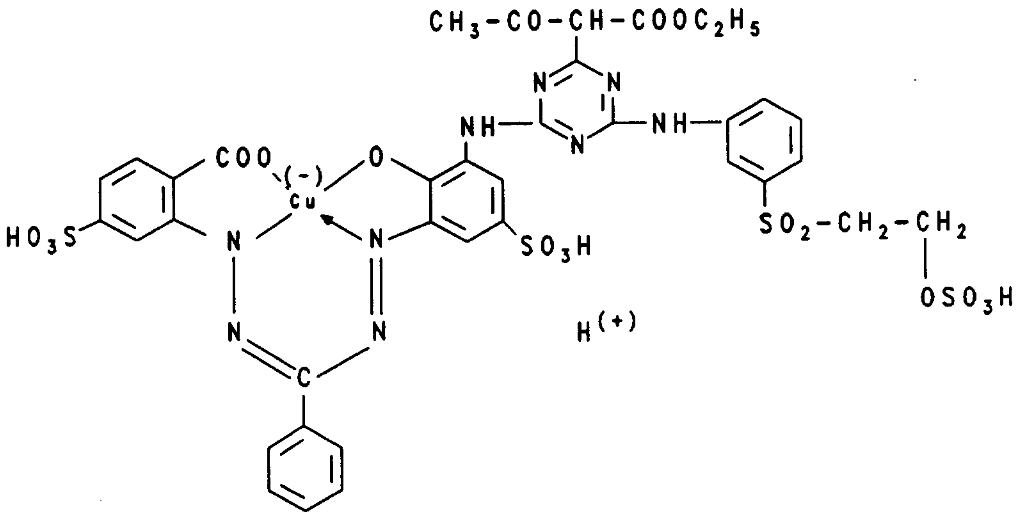

($\lambda_{max}$ = 608 nm)

und zeichnet sich durch sehr gute faserreaktive Farbstoffeigenschaften aus. Nach den in der Technik üblichen Färbeweisen für faserreaktive Farbstoffe färbt er beispielsweise Cellulosefasermaterialien in farbstarken, blauen, echten Tönen.

Beispiel 77

Man stellt gemäß den Angaben des Beispieles 4 zunächst die Monochlortriazinverbindung [das Umsetzungsprodukt aus Cyanurchlorid, Acetessigsäureethylester und 4-(β-Sulfatoethylsulfonyl)-anilin] her, gibt zu dieser die im Beispiel 76 angegebene Amino-Kupferformazan-Ausgangsverbindung und führt die Umsetzung der Chlortriazinverbindung mit der Aminogruppe des Kupferformazans bei einer Temperatur von 70 °C während drei Stunden durch. Während dieser Umsetzung kann die β-Dicarbonyl-Spaltung dünnschichtchromatographisch verfolgt und kontrolliert werden.

Aus der erhaltenen Syntheselösung wird der erfindungsgemäße Farbstoff durch Aussalzen mit Natronchlorid als Natriumsalz isoliert. Er besitzt, in Form der freien Säure geschrieben, die Formel

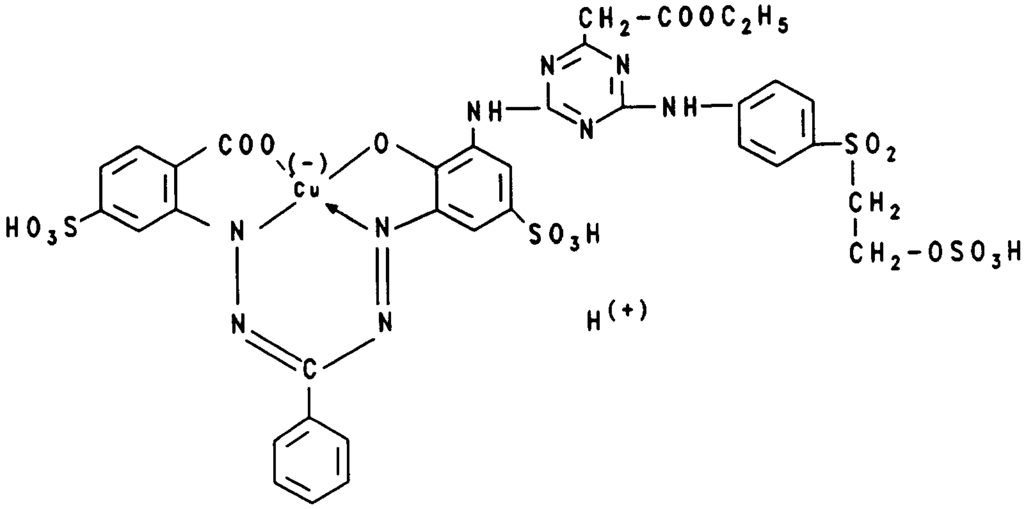

($\lambda_{max}$ = 608 nm)

und weist sehr gute faserreaktive Farbstoffeigenschaften auf. Er liefert nach den in der Technik üblichen Färbeweisen für faserreaktive Farbstoffe auf den in der Beschreibung genannten Materialien, wie insbesondere Cellulosefasermaterialien, farbstarke blaue Färbungen und Drucke mit guten Echtheitseigenschaften.

Beispiel 81

Man verfährt gemäß der Verfahrensweise des Beispieles 76, führt jedoch die Umsetzung der Chlortriazinverbindung mit dem Amino-Kupferformazan analog den Angaben des Beispieles 80 bei 70 °C durch. Man erhält einen erfindungsgemäßen Kupferformazanfarbstoff in gleicher guter Qualität, der sich konstitutionell von dem erfindungsgemäßen Farbstoff des Beispieles 76 infolge der β-Dicarbonyl-Spaltung darin unterscheidet, daß anstelle des (Acetyl)-(ethoxycarbonyl)-methyl-Restes als Substituenten an den Triazinrest die Ethoxycarbonyl-methyl-Gruppe als Substituenten gebunden ist.

Beispiel 82

Man verfährt zur Herstellung eines erfindungsgemäßen Disazofarbstoffes gemäß der Verfahrensweise des Beispieles 1, setzt jedoch anstelle der aminogruppenhaltigen Monoazo-Ausgangsverbindung die in bekannter Weise herstellbare Amino-disazo-Ausgangsverbindung 4-[4'-(4'',8''-Disulfo-naphth-2''-yl)-azo-6-sulfo-naphth-1'-yl]-azo-3-methyl-anilin ein. Man erhält den erfindungsgemäßen Disazofarbstoff der Formel (in Form der freien Säure geschrieben

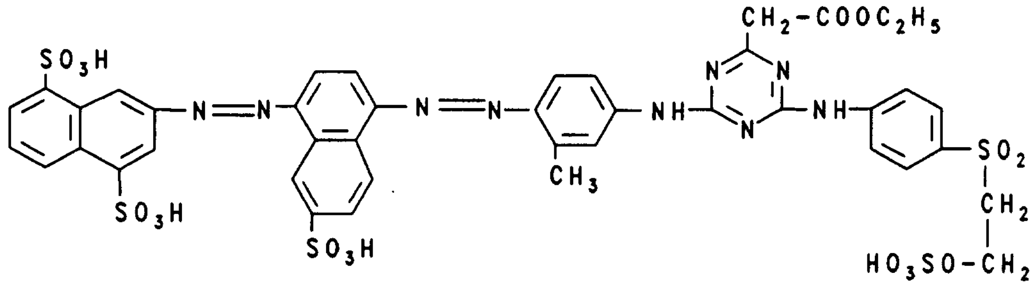

($\lambda_{max}$ = 455 nm)

der beispielsweise auf Cellulosefasermaterialien echte, farbstarke, braune Färbungen und Drucke liefert.

**Patentansprüche**

**1.** Farbstoff entsprechend der allgemeinen Formel (1)

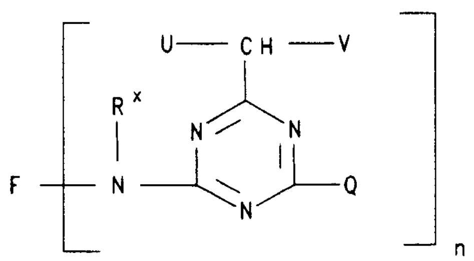

(1)

in welcher bedeuten:

- F ist der Rest eines Monoazo-, Disazo- oder Polyazofarbstoffes oder eines davon abgeleiteten Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perlyentetracarbimid-Farbstoffes;
- $R^x$ ist ein Wasserstoffatom oder eine Alkylgruppe von 1 bis 4 C-Atomen, die durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann;
- n ist die Zahl 1 oder 2;
- U ist ein Wasserstoffatom, die Cyanogruppe, eine Alkanoylgruppe von 2 bis 5 C-Atomen, eine Alkoxycarbonylgruppe von 2 bis 5 C-Atomen, die Nitrogruppe, eine Alkylsulfonylgruppe mit einem Alkylrest von 1 bis 4 C-Atomen oder eine Arylsulfonylgruppe, wobei die Arylgruppe substituiert sein kann;
- V ist die Cyanogruppe, eine Alkoxycarbonylgruppe von 2 bis 5 C-Atomen, eine Aryloxycarbonylgruppe, deren Arylrest substituiert sein kann, die Carboxygruppe, eine Alkylamino-carbonyl-Gruppe mit einem Alkylrest von 1 bis 4 C-Atomen, eine Arylamino-carbonyl-Gruppe, wobei der Arylrest substituiert sein kann, eine Alkylcarbonylgruppe von 2 bis 5 C-Atomen, eine gegebenenfalls substituierte Arylcarbonyl- oder eine Arylsulfonylgruppe oder die Aminocarbonylgruppe, eine N,N-Dialkyl-amino-carbonyl-Gruppe mit Alkylresten von jeweils 1 bis 4 C-Atomen, die Trifluormethyl-, die Nitro-oder eine Alkylsulfonylgruppe mit 1 bis 4 C-Atomen im Alkylrest;
- Q ist eine Gruppe der allgemeinen Formel (2a) oder (2b)

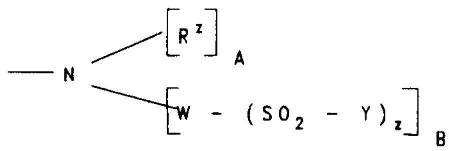

(2a)

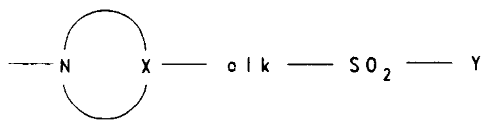

(2b)

in welchen

$R^z$ ein Wasserstoffatom oder eine Alkylgruppe von 1 bis 6 C-Atomen ist, die durch 1 oder 2 Substituenten aus der Gruppe Halogen, Hydroxy, Cyano, Alkoxy von 1 bis 4 C-Atomen, Carboxy, Carbalkoxy von 2 bis 5 C-Atomen, Phenoxycarbonyl, Alkanoyl von 2 bis 5 C-Atomen, Benzoyl, Sulfobenzoyl, Sulfamoyl, Sulfo und Sulfato und/oder durch einen gegebenenfalls durch Substituenten aus der Gruppe Halogen, Alkoxy von 1 bis 4 C-Atomen, Alkyl von 1 bis 4 C-Atomen, Sulfo und Carboxy substituierten Phenylrest substituiert sein kann, oder ein Cycloalkylrest von 5 bis 8 C-Atomen oder ein gegebenenfalls durch Substituenten aus der Gruppe Halogen, Alkoxy von 1 bis 4 C-Atomen, Alkyl von 1 bis 4 C-Atomen, Sulfo und Carboxy substituierter Phenylrest ist,

W ein Arylen-, Alkylen-, Alkylen-arylen-, Arylen-alkylen-, Alkylen-arylen-alkylen- oder Arylen-alkylen-arylen-Rest ist, wobei die Alkylenreste solche von 1 bis 8 C-Atomen sind und substituiert sein können und die Arylenreste gegebenenfalls substituierte Phenylen- oder Naphthylenreste sind und die Alkylenreste durch 1 oder mehrere Heterogruppen unterbrochen sein können und die Alkylen- und Arylenanteile in den kombinierten Alkylen/Arylen-Resten durch eine Heterogruppe voneinander getrennt sein können,

Y die Vinylgruppe bedeutet oder eine Ethylgruppe ist, die in β-Stellung einen alkalisch eliminierbaren Substituenten enthält,

z die Zahl 1 oder 2 ist,

A die Zahl Null oder 1 bedeutet und

B die Zahl 1 oder 2 ist,

wobei die Summe von (A + B) gleich der Zahl 2 ist und wobei im Falle von B gleich 2 die Gruppen $-W-(SO_2-Y)_z$ zueinander die gleiche Bedeutung oder eine voneinander verschiedene Bedeutung haben können,

X zusammen mit dem N-Atom den bivalenten Rest eines aus 1 oder 2 Alkylgruppen von 1 bis 5 C-Atomen und gegebenenfalls 1 oder 2 Heterogruppen bestehenden heterocyclischen Ringes bildet, und

alk einen Alkylenrest von 1 bis 4 C-Atomen bedeutet.

**2.** Farbstoff nach Anspruch 1, dadurch gekennzeichnet, daß der Rest der Formel (3)

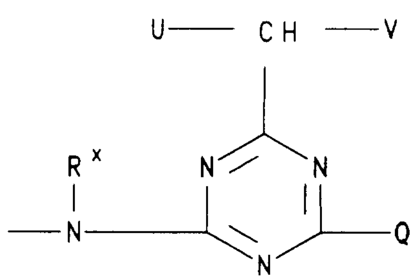

(3)

einen Rest der allgemeinen Formel (3a) oder (3b)

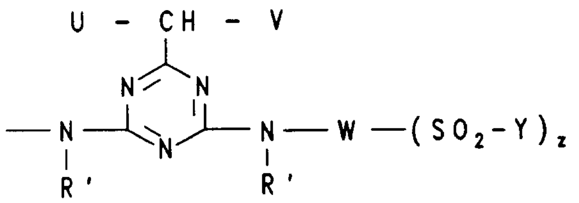

(3a)

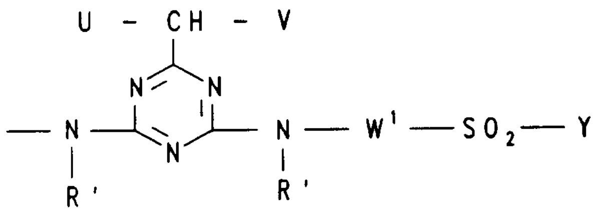

(3b)

ist, in welchen beide R' mit zueinander gleicher oder voneinander verschiedener Bedeutung jedes die Methyl- oder Ethylgruppe oder ein Wasserstoffatom bedeuten und U, V, W, Y und z die in Anspruch 1 genannten Bedeutungen besitzen und $W^1$ eine Alkylengruppe von 2 bis 4 C-Atomen bedeutet oder ein Phenylenrest ist, der durch 1 oder 2 Substituenten aus der Gruppe Methyl, Methoxy, Ethoxy und Chlor substituiert sein kann, oder eine Gruppe der allgemeinen Formel (a)

$-(CH_2)_w-$phenylen— (a)

bedeutet, in welcher w die Zahl 1, 2, 3 oder 4 ist und phenylen den 1,3-oder 1,4-Phenylenrest bedeutet.

**3.** Farbstoff nach Anspruch 1 der allgemeinen Formel (4f)

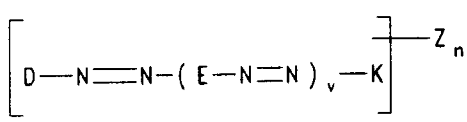

(4f)

in welcher

- Z ein Rest der in Anspruch 2 genannten allgemeinen Formel (3) oder (3a) oder (3b) ist, in welchen die einzelnen Formelglieder die in Anspruch 1 bzw. Anspruch 2 genannten Bedeutungen haben,
- n die Zahl 1 oder 2 ist,
  der Rest Z an den Rest D oder an den Rest K oder im Falle von n = 2 das eine Z an D und das andere Z an K gebunden ist,
- D für den Rest einer Diazokomponente steht, an den noch ein Azorest gebunden sein kann,
- E den bivalenten Rest einer kupplungsfähigen und diazotierbaren Verbindung bedeutet,
- K den Rest einer Kupplungskomponente darstellt, an die noch ein Azorest gebunden sein kann, und
- v für die Zahl Null oder 1 steht.

**4.** Farbstoff nach Anspruch 1 der allgemeinen Formel (4g)

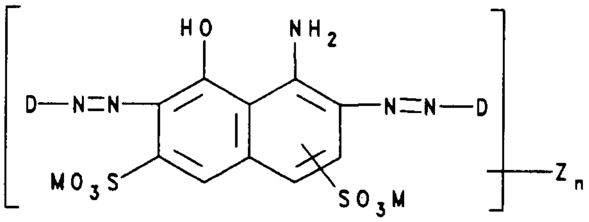

(4g)

in welcher

- Z ein Rest der in Anspruch 2 genannten allgemeinen Formel (3) oder (3a) oder (3b) bedeutet, in welchen die einzelnen Formelglieder die in Anspruch 1 bzw. Anspruch 2 genannten Bedeutungen haben,
- n die Zahl 1 oder 2 ist,
  der Rest Z an den Rest D gebunden ist, wobei im Falle von n = 2 beide Z nicht gleichzeitig an dasselbe D gebunden sind,
- D jeweils für den Rest einer Diazokomponente, an den noch ein Azorest gebunden sein kann, steht und die zueinander gleiche oder voneinander verschiedene Bedeutungen besitzen können, und
- M ein Wasserstoffatom oder ein Alkalimetall ist.

**5.** Farbstoff nach Anspruch 1 der allgemeinen Formel (4h)

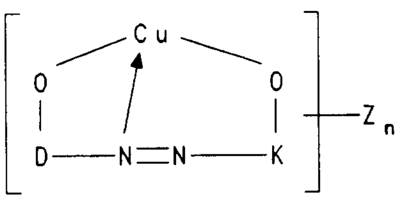

(4h)

in welcher

- Z ein Rest der in Anspruch 2 genannten allgemeinen Formel (3) oder (3a) oder (3b) ist, in welchen die einzelnen Formelglieder die in Anspruch 1 bzw. Anspruch 2 genannten Bedeutungen haben,
- n die Zahl 1 oder 2 ist,
  der Rest Z an den Rest D oder an den Rest K oder im Falle von n = 2 das eine Z an D und das andere Z an K gebunden ist,
- D für den Rest einer Diazokomponente steht, an den noch ein Azorest gebunden sein kann, und
- K den Rest einer Kupplungskomponente darstellt, an die noch ein Azorest gebunden sein kann.

**6.** Farbstoff nach mindestens einem der Ansprüche 1 bis 5, dadurch gekennzeichnet, daß $R^x$ ein Wasserstoffatom ist.

**7.** Farbstoff nach mindestens einem der Ansprüche 1 bis 6, dadurch gekennzeichnet, daß n die Zahl 1 ist.

**8.** Farbstoff nach mindestens einem der Ansprüche 1 bis 7, dadurch gekennzeichnet, daß U ein Wasserstoffatom, die Acetyl-, Ethoxycarbonyl-oder Methoxycarbonyl-Gruppe ist.

**9.** Farbstoff nach mindestens einem der Ansprüche 1 bis 7, dadurch gekennzeichnet, daß U ein Wassertoffatom ist.

**10.** Verbindung nach mindestens einem der Ansprüche 1 bis 9, dadurch gekennzeichnet, daß V die Cyanogruppe, die Acetyl-, Methoxycarbonyl-oder Ethoxycarbonyl-Gruppe ist.

**11.** Verbindung nach mindestens einem der Ansprüche 1 bis 9, dadurch gekennzeichnet, daß V die Ethoxycarbonyl- oder Methoxycarbonyl-Gruppe ist.

**12.** Verfahren zur Herstellung eines Farbstoffes von Anspruch 1, dadurch gekennzeichnet, daß man für den jeweiligen Farbstoff typische Vorprodukte, von denen mindestens eines eine Gruppe der in Anspruch 2 genannten allgemeinen Formel (3) enthält, miteinander umsetzt, oder daß man ein Trihalogen-s-triazin der allgemeinen Formel (21)

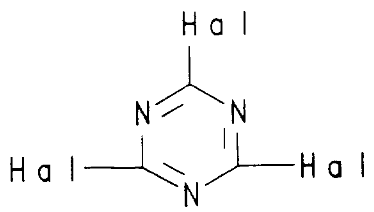

(21)

in welcher Hal für ein Halogenatom steht, mit einer Verbindung der allgemeinen Formel (20), einer Verbindung der allgemeinen Formel H-Q und einer Verbindung der allgemeinen Formel $U^*$-$CH_2$-V , in welchen Q, F, $R^x$, n und V die in Anspruch 1 genannten Bedeutungen haben und $U^*$ die Bedeutung von U, ausgenommen ein Wasserstoffatom, besitzt, in stöchiometrischen Mengen in beliebiger Reihenfolge miteinander umsetzt (wobei bei den Ausgangsverbindungen die Gruppe Y auch eine $\beta$-Hydroxyethyl-Gruppe sein kann),
und daß man gegebenenfalls anschließend weitere, dem Fachmann geläufige erforderliche Umwandlungsreaktionen durchführt.

**13.** Verfahren nach Anspruch 12, dadurch gekennzeichnet, daß man eine Verbindung der allgemeinen Formel (22)

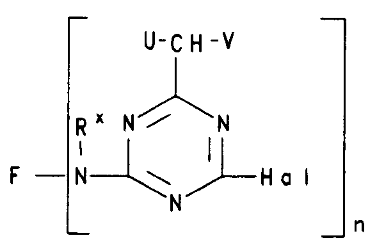

(22)

in welcher F, $R^x$, U, V und n die in Anspruch 1 genannte Bedeutungen haben und Hal für ein Halogenatom steht, mit einer Verbindung der allgemeinen Formel H-Q mit Q der in Anspruch 1 genannten Bedeutung umsetzt, oder daß man eine Verbindung der allgemeinen Formel (20) mit einer Verbindung der allgemeinen Formel (23)

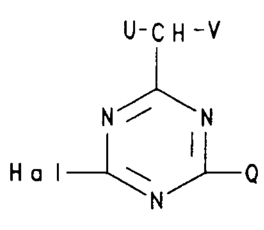

(23)

mit Hal, U, V und Q der in Anspruch 1 genannten Bedeutung umsetzt.

**14.** Verwendung eines Farbstoffes von mindestens einem der Ansprüche 1 bis 11 oder eines nach Anspruch 12 hergestellten Farbstoffes zum Färben und Bedrucken von hydroxy- und/oder carbonamidgruppenhaltigem Material, insbesondere Fasermaterial.

**15.** Verfahren zum Färben und Bedrucken von hydroxy- und/oder carbonamidgruppenhaltigem Material, vorzugsweise Fasermaterial, bei welchem man einen Farbstoff auf das Material aufbringt und den

Farbstoff auf dem Material mittels Wärme oder mit Hilfe eines alkalisch wirkenden Mittels oder durch beide Manßnahmen fixiert, dadurch gekennzeichnet, daß man als Farbstoff einen Farbstoff von mindestens einem der Ansprüche 1 bis 11 oder einen nach Anspruch 12 hergestellten Farbstoff verwendet.